# FASCICULE DE BREVET EUROPEEN

(11) **EP 4 308 393 B1**
(45) Date de publication et mention de la délivrance du brevet: **12.03.2025**
(21) Numéro de dépôt: 22712593.7
(22) Date de dépôt: 15.03.2022
(51) Int. Cl.: B60H 1/00, B60H 1/32, H01M 10/625, H01M 10/663, F25B 5/02, F25B 6/04, F25B 25/00

(54) **SYSTÈME DE CONDITIONNEMENT THERMIQUE**
WÄRMEKONDITIONIERUNGSSYSTEM
THERMAL CONDITIONING SYSTEM

(30) Priorité: 15.03.2021 FR 2102564
(43) Date de publication de la demande: 24.01.2024
(73) Titulaire: VALEO SYSTEMES THERMIQUES, 78320 Le Mesnil Saint-Denis (FR)
(72) Inventeur: YAHIA, Mohamed, 78320 Le Mesnil-Saint-Denis (FR); NICOLAS, Bertrand, 78320 Le Mesnil-Saint-Denis (FR); KARL, Stefan, 78320 Le Mesnil-Saint-Denis (FR)
(74) Mandataire: Valeo Systèmes Thermiques
(86) Numéro de dépôt international: PCT/EP2022/056596
(87) Numéro de publication internationale: WO 2022/194808

(56) Documents cités:
- WO-A1-2013/055088
- CN-U- 209 274 301
- DE-A1- 102018 218 264
- US-A1- 2012 000 236

## Description

### Domaine technique

La présente invention se rapporte au domaine des systèmes de conditionnement thermique. Ces systèmes peuvent notamment équiper un véhicule automobile. De tels systèmes permettent par exemple une régulation thermique de différents organes du véhicule, tel l'habitacle ou une batterie de stockage d'énergie électrique, dans le cas d'un véhicule à propulsion électrique. Les échanges de chaleur sont gérés principalement par la compression et la détente d'un fluide réfrigérant au sein de plusieurs échangeurs de chaleur.

### Technique antérieure

Les systèmes de conditionnement thermiques font couramment appel à une boucle de fluide réfrigérant et une boucle de fluide caloporteur échangeant de la chaleur avec le fluide réfrigérant. De tels systèmes sont ainsi appelés indirects. Le brevet EP2933586 B1 ou le document CN 209 274 301 U en sont des exemples. La boucle de fluide réfrigérant est formée de sorte que le fluide réfrigérant cède de la chaleur à un liquide caloporteur dans un échangeur bifluide, puis traverse un échangeur de chaleur disposé dans l'habitacle, encore appelé évaporateur. Cet échangeur de chaleur permet de refroidir l'habitacle. Le chauffage de l'habitacle est lui assuré notamment par un radiateur de chauffage qui dissipe la chaleur du liquide caloporteur dans le flux d'air envoyé à l'habitacle.

Les différents échangeurs de chaleur sont classiquement distribués en différents emplacements du véhicule. Certains échangeurs sont disposés dans l'habitacle du véhicule. D'autres échangeurs sont disposés sous le capot, proches de la face avant du véhicule. Les différents composants du système de conditionnement thermique sont reliés par des canalisations permettant la circulation du fluide réfrigérant et du fluide caloporteur. L'intégration de l'ensemble des composants peut être difficile. De plus, lors de l'assemblage du véhicule chaque composant doit être monté à tour de rôle. Le circuit de fluide réfrigérant doit être rempli une fois le montage terminé, et une vérification de l'étanchéité du circuit et du bon fonctionnement de l'ensemble doit ensuite très faite. La durée de montage et de vérification est donc relativement longue.

Il existe ainsi un besoin de pouvoir disposer de systèmes de conditionnement thermique plus faciles à intégrer, et pouvant être livrés sous la forme d'un module déjà testé et prêt à fonctionner. De plus, il est intéressant de pouvoir disposer de systèmes de conditionnement thermique permettant une plus grande standardisation des composants employés.

### Résumé

A cette fin, la présente invention, telle que définie dans la revendication 1, propose un système de conditionnement thermique comportant :
- un circuit de liquide caloporteur comportant :
   une boucle principale de circulation, une boucle secondaire, une première branche, une deuxième branche,
- un circuit de fluide réfrigérant comprenant une boucle principale de circulation de fluide réfrigérant comportant successivement selon un sens de circulation du fluide réfrigérant:
   -- un dispositif de compression,
   -- un premier échangeur bifluide agencé conjointement sur le circuit de fluide réfrigérant et sur la boucle principale du circuit de liquide caloporteur de façon à permettre un échange de chaleur entre le fluide réfrigérant et le liquide caloporteur de la boucle principale,
   -- un deuxième échangeur bifluide agencé conjointement sur le circuit de fluide réfrigérant et sur la boucle principale du circuit de liquide caloporteur de façon à permettre un échange de chaleur entre le fluide réfrigérant et le liquide caloporteur de la boucle principale,
   -- un premier dispositif de détente,
   -- un troisième échangeur bifluide agencé conjointement sur le circuit de fluide réfrigérant et sur la boucle secondaire du circuit de liquide caloporteur de façon à permettre un échange de chaleur entre le fluide réfrigérant et le liquide caloporteur de la boucle secondaire,

dans lequel la première branche du circuit de liquide caloporteur relie un premier point de connexion disposé sur la boucle principale à un deuxième point de connexion disposé sur la boucle principale, la première branche étant configurée pour que le liquide caloporteur en sortie du premier échangeur bifluide regagne une entrée du premier échangeur bifluide sans passer par le deuxième échangeur bifluide, la première branche comportant un deuxième échangeur de chaleur configuré pour échanger de la chaleur avec un deuxième flux d'air,
et dans lequel la deuxième branche de dérivation du circuit de liquide caloporteur relie un troisième point de connexion disposé sur la première branche en aval du deuxième échangeur de chaleur à un quatrième point de connexion disposé sur la boucle principale en amont du deuxième échangeur bifluide,
la deuxième branche de dérivation comportant un troisième échangeur de chaleur configuré pour échanger de la chaleur avec le deuxième flux d'air.

La structure proposée pour le système de conditionnement thermique, avec deux échangeurs bifluide en série au sens de la circulation de fluide réfrigérant, chaque échangeur bifluide étant couplé à un échangeur de chaleur pouvant absorber ou dissiper de la chaleur dans le deuxième flux d'air, permet de multiples modes de fonctionnement permettant d'optimiser les performances thermodynamiques en fonction des conditions de fonctionnement. La structure proposée est particulièrement simple pour les lignes de circulation du fluide réfrigérant, ce qui permet d'obtenir un circuit de fluide réfrigérant compact, utilisant une faible quantité de fluide réfrigérant.

Les caractéristiques listées dans les paragraphes suivant peuvent être mises en œuvre indépendamment les unes des autres ou selon toutes les combinaisons techniquement possibles.

La boucle principale du circuit de liquide caloporteur comporte un premier échangeur de chaleur configuré pour échanger de la chaleur avec un premier flux d'air.

Le système de conditionnement thermique est un système de conditionnement thermique d'un véhicule automobile.

Le premier flux d'air est un flux d'air intérieur à un habitacle d'un véhicule automobile.

Le deuxième flux d'air est un flux d'air extérieur à un habitacle du véhicule.

Le troisième échangeur de chaleur est disposé en amont du deuxième échangeur de chaleur selon un sens d'écoulement du deuxième flux d'air.

Le troisième échangeur bifluide est configuré pour être couplé thermiquement avec un premier élément d'une chaine de traction électrique d'un véhicule automobile.

Le premier élément de la chaine de traction électrique du véhicule est configuré pour échanger de la chaleur avec le liquide caloporteur circulant dans la boucle secondaire de liquide caloporteur.

Le premier élément de la chaine de traction électrique du véhicule comprend un moteur électrique de traction du véhicule.

Le premier élément de la chaine de traction électrique du véhicule est un module électronique de pilotage d'un moteur électrique de traction du véhicule.

La boucle principale du circuit de liquide caloporteur et la boucle secondaire du circuit de liquide caloporteur sont configurées pour être en communication.

La boucle secondaire du circuit de liquide caloporteur est reliée fluidiquement à la première branche du circuit de liquide caloporteur.

Le circuit de liquide caloporteur comporte une troisième branche reliant un cinquième point de connexion disposé sur la première branche entre le premier point de connexion et le deuxième échangeur de chaleur à un sixième point de connexion disposé sur la boucle secondaire en aval du premier élément.

Le circuit de liquide caloporteur comporte une quatrième branche reliant un septième point de connexion disposé sur la boucle secondaire en amont du premier élément à un huitième point de connexion disposé sur la première branche entre le troisième point de connexion et le deuxième point de connexion.

Le circuit de fluide réfrigérant comporte une première branche de dérivation reliant un premier point de raccordement disposé sur la boucle principale en aval du deuxième échangeur bifluide et en amont du troisième échangeur bifluide à un deuxième point de raccordement disposé sur la boucle principale en aval du troisième échangeur bifluide et en amont du dispositif de compression, la première branche de dérivation comportant un quatrième échangeur bifluide configuré pour être couplé thermiquement avec un deuxième élément d'une chaine de traction électrique du véhicule.

Le quatrième échangeur bifluide est configuré pour échanger de la chaleur avec un liquide caloporteur circulant dans une boucle auxiliaire.

Le deuxième élément de la chaine de traction électrique est disposé sur la boucle auxiliaire de liquide caloporteur. Le deuxième élément de la chaine de traction électrique du véhicule est configuré pour échanger de la chaleur avec le liquide caloporteur de la boucle auxiliaire.

Le deuxième élément de la chaine de traction électrique du véhicule est une batterie de stockage d'énergie électrique.

La première branche de dérivation comporte un deuxième dispositif de détente disposé en amont du quatrième échangeur bifluide.

Le premier point de raccordement est disposé sur la boucle principale du circuit de fluide réfrigérant en amont du premier dispositif de détente.

La boucle principale du circuit de fluide réfrigérant comporte un dispositif d'accumulation de fluide réfrigérant disposé en aval du troisième échangeur bifluide et en amont du dispositif de compression.

La boucle principale du circuit de fluide réfrigérant comporte un dispositif d'accumulation de fluide réfrigérant disposé en aval du troisième échangeur bifluide et en amont du deuxième point de raccordement.

La boucle principale du circuit de fluide réfrigérant comporte un dispositif d'accumulation de fluide réfrigérant disposé en aval du deuxième point de raccordement et en amont du dispositif de compression.

Le circuit de fluide réfrigérant comporte une deuxième branche de dérivation reliant un troisième point de raccordement disposé sur la boucle principale en aval du deuxième échangeur bifluide et en amont du premier point de raccordement à un quatrième point de raccordement disposé sur la boucle principale en aval du troisième échangeur bifluide et en amont du deuxième point de raccordement, la deuxième branche de dérivation comportant successivement un troisième dispositif de détente et un quatrième échangeur de chaleur configuré pour échanger de la chaleur avec le premier flux d'air.

Le quatrième échangeur de chaleur est disposé en amont du troisième échangeur de chaleur selon un sens d'écoulement du deuxième flux d'air.

Le circuit de fluide réfrigérant comporte une troisième branche de dérivation reliant un cinquième point de raccordement disposé sur la boucle principale en aval du dispositif de compression et en amont du deuxième échangeur bifluide à un sixième point de raccordement disposé sur la boucle principale en aval du cinquième point de raccordement, la troisième branche de dérivation comportant un cinquième échangeur de chaleur configuré pour échanger de la chaleur avec le deuxième flux d'air.

Le cinquième échangeur de chaleur est disposé en aval du deuxième échangeur de chaleur selon un sens d'écoulement du deuxième flux d'air.

Le circuit de fluide réfrigérant comporte une quatrième branche de dérivation reliant un septième point de raccordement disposé sur la boucle principale en aval du quatrième point de raccordement et en amont du dispositif de compression à un huitième point de raccordement disposé sur la troisième branche de dérivation en aval du cinquième point de raccordement et en amont du cinquième échangeur de chaleur.

Le circuit de fluide réfrigérant comporte une cinquième branche de dérivation reliant un neuvième point de raccordement disposé sur la boucle principale en aval du troisième point de raccordement et en amont du troisième échangeur bifluide à un dixième point de raccordement disposé sur la troisième branche de dérivation en aval du cinquième échangeur de chaleur et en amont du sixième point de raccordement, et la cinquième branche de dérivation comporte un quatrième dispositif de détente.

Selon un mode de réalisation, la boucle principale du circuit de fluide réfrigérant comprend un sixième échangeur de chaleur disposé en amont du premier dispositif de détente, le sixième échangeur de chaleur étant configuré pour échanger de la chaleur avec le premier flux d'air.

Le sixième échangeur de chaleur est disposé en amont du premier échangeur bifluide selon le sens de parcours du fluide réfrigérant.

Selon un autre mode de réalisation du système de conditionnement thermique, le circuit de fluide réfrigérant comporte une sixième branche de dérivation reliant un onzième point de raccordement disposé sur la boucle principale en amont du premier échangeur bifluide à un douzième point de raccordement disposé sur la boucle principale en aval du deuxième échangeur bifluide, et dans lequel la sixième branche de dérivation comprend un sixième échangeur de chaleur configuré pour échanger de la chaleur avec le premier flux d'air.

La boucle principale du circuit de fluide réfrigérant comporte une première vanne d'arrêt disposée entre le cinquième point de raccordement et le sixième point de raccordement.

La troisième branche de dérivation comporte une deuxième vanne d'arrêt disposée entre le cinquième point de raccordement et le huitième point de raccordement.

La quatrième branche de dérivation comporte une troisième vanne d'arrêt.

La troisième branche de dérivation comporte un premier clapet anti-retour configuré pour bloquer une circulation du fluide réfrigérant du sixième point de raccordement vers le dixième point de raccordement.

La cinquième branche de dérivation comporte un deuxième clapet anti-retour configuré pour bloquer une circulation du fluide réfrigérant du dixième point de raccordement vers le neuvième point de raccordement.

La boucle principale de liquide caloporteur comporte une première pompe de circulation de liquide caloporteur.

La première pompe de circulation du liquide caloporteur est disposée entre le premier point de connexion et le deuxième point de connexion.

La première pompe de circulation est configurée pour faire circuler le liquide caloporteur du premier échangeur bifluide vers le premier point de connexion.

La boucle secondaire de liquide caloporteur comporte une deuxième pompe de circulation du liquide caloporteur.

La deuxième pompe de circulation du liquide caloporteur est disposée sur la boucle secondaire entre le septième point de connexion et le sixième point de connexion.

La deuxième pompe de circulation du liquide caloporteur est configurée pour faire circuler le liquide caloporteur du septième point de connexion vers le sixième point de connexion.

La boucle principale de circulation de liquide caloporteur comporte une première vanne trois-voies disposée conjointement sur la boucle principale et sur la première branche.

La boucle secondaire de circulation de liquide caloporteur comporte une deuxième vanne trois-voies disposée conjointement sur la boucle secondaire et sur la troisième branche.

Le système de conditionnement thermique comporte un carter définissant un volume de réception, et la boucle principale du circuit de fluide réfrigérant est contenue à l'intérieur du carter.

Le carter définit un volume étanche au fluide réfrigérant.

Le carter définit un volume fermé dans lequel le circuit de fluide réfrigérant est contenu.

La première branche de dérivation du circuit de fluide réfrigérant est contenue à l'intérieur du carter.

La deuxième branche de dérivation du circuit de fluide réfrigérant comporte une première portion contenue à l'intérieur du carter, le carter comporte une première entrée/sortie de fluide réfrigérant, la première portion reliant le troisième point de raccordement et la neuvième entrée/sortie.

La deuxième branche de dérivation du circuit de fluide réfrigérant comporte une deuxième portion contenue à l'intérieur du carter, le carter comporte une deuxième entrée/sortie de fluide réfrigérant, la deuxième portion reliant le quatrième point de raccordement et la deuxième entrée/sortie.

Le troisième dispositif de détente est contenu à l'intérieur du carter.

La troisième branche de dérivation du circuit de fluide réfrigérant comporte une troisième portion contenue à l'intérieur du carter, le carter comporte une troisième entrée/sortie de fluide réfrigérant, la troisième portion reliant le cinquième point de raccordement et la troisième entrée/sortie.

La troisième branche de dérivation du circuit de fluide réfrigérant comporte une quatrième portion contenue à l'intérieur du carter, le carter comporte une quatrième entrée/sortie de fluide réfrigérant, la quatrième portion reliant le sixième point de raccordement et la quatrième entrée/sortie.

La quatrième branche de dérivation est contenue à l'intérieur du carter.

La cinquième branche de dérivation est contenue à l'intérieur du carter.

La boucle principale du circuit de liquide caloporteur comporte une cinquième portion contenue à l'intérieur du carter, le carter comporte une cinquième entrée/sortie de liquide caloporteur et une sixième entrée/sortie de liquide caloporteur, la cinquième portion reliant la cinquième entrée/sortie et la sixième entrée/sortie, et le premier échangeur bifluide et le deuxième échangeur bifluide sont disposés sur la cinquième portion.

La première pompe de circulation de liquide caloporteur est contenue à l'intérieur du carter.

La première branche du circuit de liquide caloporteur comporte une sixième portion contenue à l'intérieur du carter, le carter comporte une septième entrée/sortie de liquide caloporteur, la sixième portion reliant la septième entrée/sortie et le deuxième point de connexion.

Le deuxième point de connexion est disposé à l'intérieur du carter.

La deuxième branche circuit de liquide caloporteur comporte une septième portion contenue à l'intérieur du carter, le carter de réception comporte une huitième entrée/sortie de liquide caloporteur, et la septième portion relie la huitième entrée/sortie et le quatrième point de connexion.

La boucle secondaire circuit de liquide caloporteur comporte une huitième portion contenue à l'intérieur du carter, le carter comporte une neuvième entrée/sortie de liquide caloporteur et une dixième entrée/sortie de liquide caloporteur, la huitième portion relie la neuvième entrée/sortie et la dixième entrée/sortie, et le troisième échangeur bifluide est disposé sur la huitième portion.

La boucle principale du circuit de liquide caloporteur comporte une neuvième portion contenue à l'intérieur du carter, le carter comporte une onzième entrée/sortie de liquide caloporteur et une douzième entrée/sortie de liquide caloporteur, la neuvième portion reliant la onzième entrée/sortie et la douzième entrée/sortie.

La boucle principale du circuit de liquide caloporteur comporte un dispositif de chauffage électrique configuré pour chauffer le liquide caloporteur.

Le dispositif de chauffage électrique est disposé à l'extérieur du carter.

Le dispositif de chauffage électrique est contenu à l'intérieur du carter.

La boucle auxiliaire du circuit de liquide caloporteur comporte une dixième portion contenue à l'intérieur du carter, le carter comporte une treizième entrée/sortie de liquide caloporteur et une quatorzième entrée/sortie de liquide caloporteur, la dixième portion reliant la treizième entrée/sortie et la quatorzième entrée/sortie, et le quatrième échangeur bifluide est disposé sur la dixième portion.

La boucle principale comprend un échangeur de chaleur interne, l'échangeur de chaleur interne comportant une première section d'échange thermique disposée en aval du deuxième échangeur bifluide et en amont du premier point de raccordement et une deuxième section d'échange thermique disposée en aval du dispositif d'accumulation de fluide réfrigérant et en amont du dispositif de compression, l'échangeur de chaleur interne étant configuré pour permettre un échange de chaleur entre le fluide réfrigérant dans la première section d'échange thermique et le fluide réfrigérant dans la deuxième section d'échange thermique.

Selon un procédé de fonctionnement d'un système de conditionnement thermique tel que décrit précédemment, dans un mode dit de refroidissement :
- le fluide réfrigérant circule dans le dispositif de compression où il passe à haute pression, et circule successivement dans le cinquième échangeur de chaleur où il cède de la chaleur au deuxième flux d'air, dans le premier échangeur bifluide, dans le deuxième échangeur bifluide, dans le troisième dispositif de détente où il passe à basse pression, dans le quatrième échangeur de chaleur où il absorbe de la chaleur du premier flux d'air, le fluide réfrigérant à basse pression retournant au dispositif de compression,
- le liquide caloporteur circule successivement dans le deuxième échangeur bifluide, dans le premier échangeur bifluide, dans le deuxième échangeur de chaleur où il cède de la chaleur au deuxième flux d'air,

se divise en un premier débit circulant dans la première branche et un deuxième débit circulant dans la deuxième branche,
le premier débit rejoignant la boucle principale en amont du premier échangeur bifluide et le deuxième débit rejoignant la boucle principale en amont du deuxième échangeur bifluide.

Selon un procédé de fonctionnement d'un système de conditionnement thermique tel que décrit précédemment, dans un mode dit de chauffage :
- le fluide réfrigérant circule dans le dispositif de compression où il passe à haute pression, et circule successivement dans le premier échangeur bifluide où il cède de la chaleur au liquide caloporteur, dans le deuxième échangeur bifluide où il cède de la chaleur au liquide caloporteur, dans le quatrième dispositif de détente où il passe à basse pression, dans le cinquième échangeur de chaleur où il absorbe de la chaleur du deuxième flux d'air, le fluide réfrigérant à basse pression retournant au dispositif de compression,
- le liquide caloporteur circule successivement dans le deuxième échangeur bifluide où il reçoit de la chaleur du fluide réfrigérant, dans le premier échangeur bifluide où il reçoit de la chaleur du fluide réfrigérant, dans le premier échangeur de chaleur où il cède de la chaleur au premier flux d'air.

Selon un procédé de fonctionnement d'un système de conditionnement thermique tel que décrit auparavant, dans un mode dit de déshumidification parallèle :
- le fluide réfrigérant circule dans le dispositif de compression où il passe à haute pression, et circule successivement dans le premier échangeur bifluide où il cède de la chaleur au liquide caloporteur, dans le deuxième échangeur bifluide où il cède de la chaleur au liquide caloporteur, se divise entre un premier débit et un deuxième débit,
   le premier débit circulant dans le quatrième dispositif de détente où il passe à basse pression, dans le cinquième échangeur de chaleur où il absorbe de la chaleur du deuxième flux d'air,
   le deuxième débit circulant dans le troisième dispositif de détente où il passe à basse pression, dans le quatrième échangeur de chaleur où il absorbe de la chaleur du premier flux d'air,
   le premier débit de fluide réfrigérant à basse pression et le deuxième débit de fluide réfrigérant à basse pression se rejoignant avant de rejoindre le dispositif de compression,
- le liquide caloporteur circule successivement dans le deuxième échangeur bifluide où il reçoit de la chaleur du fluide réfrigérant, dans le premier échangeur bifluide où il reçoit de la chaleur du fluide réfrigérant, dans le premier échangeur de chaleur où il cède de la chaleur au premier flux d'air.

### Brève description des dessins

D'autres caractéristiques, détails et avantages apparaîtront à la lecture de la description détaillée ci-après, et à l'analyse des dessins annexés, sur lesquels :
[Fig. 1] est une vue schématique d'un système de conditionnement thermique selon un premier mode de réalisation de l'invention,
[Fig. 2] est une vue schématique d'un système de conditionnement thermique selon un deuxième mode de réalisation de l'invention,
[Fig. 3] est une vue schématique d'un système de conditionnement thermique selon une première variante du deuxième mode de réalisation de l'invention,
[Fig. 4] est une vue schématique d'un système de conditionnement thermique selon une deuxième variante du deuxième mode de réalisation de l'invention,
[Fig. 5] est une vue schématique d'un système de conditionnement thermique selon un troisième mode de réalisation de l'invention,
[Fig. 6] est une vue schématique d'un système de conditionnement thermique selon une variante du troisième mode de réalisation,
[Fig. 7] est une vue schématique d'un système de conditionnement thermique selon un quatrième mode de réalisation de l'invention,
[Fig. 8] représente une vue schématique du système de conditionnement thermique de la figure 6 selon un premier mode de fonctionnement, dit de mode de refroidissement,
[Fig. 9] représente une vue schématique du système de conditionnement thermique de la figure 6 selon un deuxième mode de fonctionnement, dit mode de chauffage,
[Fig. 10] représente une vue schématique du système de conditionnement thermique de la figure 6 selon un troisième mode de fonctionnement, dit mode de déshumidification parallèle.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre. On peut interchanger les dénominations 'premier','deuxième', 'troisième', etc...

Dans la description qui suit, le terme "un premier élément en amont d'un deuxième élément" signifie que le premier élément est placé avant le deuxième élément par rapport au sens de circulation, ou de parcours, d'un fluide. De manière analogue, le terme "un premier élément en aval d'un deuxième élément" signifie que le premier élément est placé après le deuxième élément par rapport au sens de circulation, ou de parcours, du fluide considéré. Dans le cas du circuit de fluide réfrigérant, le terme « un premier élément est en amont d'un deuxième élément » signifie que le fluide réfrigérant parcourt successivement le premier élément, puis le deuxième élément, sans passer par le dispositif de compression. Autrement dit, le fluide réfrigérant sort du dispositif de compression, traverse éventuellement un ou plusieurs éléments, puis traverse le premier élément, puis le deuxième élément, puis regagne le dispositif de compression, éventuellement après avoir traversé d'autres éléments.

Quand il est précisé qu'un sous-système comporte un élément donné, cela n'exclut pas la présence d'autres éléments dans ce sous-système.

Chacun des dispositifs de détente employés peut être un détendeur électronique, un détendeur thermostatique, ou un orifice calibré. Dans le cas d'un détendeur électronique, la section de passage permettant de faire passer le fluide réfrigérant peut être ajustée de manière continue entre une position de fermeture et une position d'ouverture maximale. Pour cela, l'unité de contrôle du système pilote un moteur électrique qui déplace un obturateur mobile contrôlant la section de passage offerte au fluide réfrigérant.

Le dispositif de compression 7 peut être un compresseur électrique, c'est-à-dire un compresseur dont les pièces mobiles sont entrainées par un moteur électrique. Le dispositif de compression 7 comporte un côté aspiration du fluide réfrigérant à basse pression, encore appelé entrée 7a du dispositif de compression, et un côté refoulement du fluide réfrigérant à haute pression, encore appelé sortie 7b du dispositif de compression 7. Les pièces mobiles internes du compresseur 7 font passer le fluide réfrigérant d'une basse pression côté entrée à une haute pression côté sortie. Après détente dans un ou plusieurs organes de détente, le fluide réfrigérant revient à l'entrée 7a du compresseur 7 et recommence un nouveau cycle thermodynamique.

Chaque point de raccordement permet au fluide réfrigérant de passer dans l'une ou l'autre des portions de circuit se rejoignant à ce point de raccordement. La répartition du fluide réfrigérant entre les portions de circuit se rejoignant en un point de raccordement se fait en jouant sur l'ouverture ou la fermeture des vannes d'arrêt ou dispositifs de détente compris sur chacune des branches raccordées à ce point. Autrement dit, chaque point de raccordement est un moyen de redirection du fluide réfrigérant arrivant à ce point de raccordement.

Des vannes d'arrêt et des vannes antiretour permettent ainsi de diriger sélectivement le fluide réfrigérant dans les différentes branches du circuit de réfrigérant, afin d'assurer différents modes de fonctionnement, comme il sera décrit ultérieurement.

Le fluide réfrigérant utilisé par le circuit de fluide réfrigérant 1 est ici un fluide chimique tel que le R1234yf. D'autres fluides réfrigérants pourraient être employés, comme par exemple le R134a, ou encore le R290.

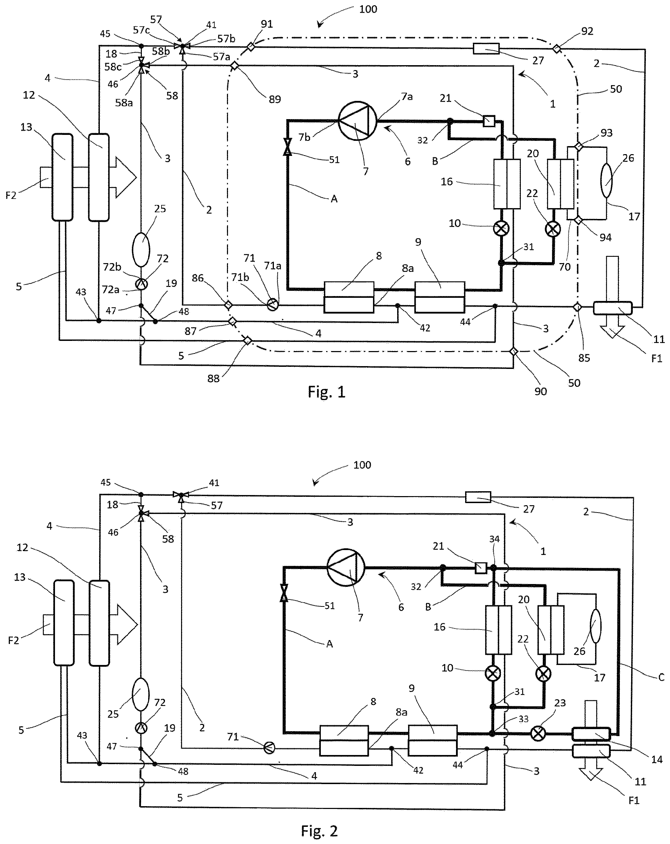

On a représenté sur la figure 1 un premier mode de réalisation d'un système de conditionnement thermique 100 comportant :
- un circuit de liquide caloporteur 1 comportant :
   une boucle principale 2 de circulation, une boucle secondaire 3, une première branche 4, une deuxième branche 5,
- un circuit de fluide réfrigérant 6 comprenant une boucle principale A de circulation de fluide réfrigérant comportant successivement selon un sens de circulation du fluide réfrigérant:
   -- un dispositif de compression 7,
   -- un premier échangeur bifluide 8 agencé conjointement sur le circuit de fluide réfrigérant 6 et sur la boucle principale 2 du circuit de liquide caloporteur 1 de façon à permettre un échange de chaleur entre le fluide réfrigérant et le liquide caloporteur de la boucle principale 2,
   -- un deuxième échangeur bifluide 9 agencé conjointement sur le circuit de fluide réfrigérant 6 et sur la boucle principale 2 du circuit de liquide caloporteur 1 de façon à permettre un échange de chaleur entre le fluide réfrigérant et le liquide caloporteur de la boucle principale 2,
   -- un premier dispositif de détente 10,
   -- un troisième échangeur bifluide 16 agencé conjointement sur le circuit de fluide réfrigérant 6 et sur la boucle secondaire 3 du circuit de liquide caloporteur 1 de façon à permettre un échange de chaleur entre le fluide réfrigérant et le liquide caloporteur de la boucle secondaire 3,

la première branche 4 du circuit de liquide caloporteur 1 relie un premier point de connexion 41 disposé sur la boucle principale 2 à un deuxième point de connexion 42 disposé sur la boucle principale 2, la première branche 4 étant configurée pour que le liquide caloporteur en sortie du premier échangeur bifluide 8 regagne une entrée 8a du premier échangeur bifluide 8 sans passer par le deuxième échangeur bifluide 9, la première branche 4 comportant un deuxième échangeur de chaleur 12 configuré pour échanger de la chaleur avec un deuxième flux d'air F2,
et la deuxième branche 5 du circuit de liquide caloporteur 1 relie un troisième point de connexion 43 disposé sur la première branche 4 en aval du deuxième échangeur de chaleur 12 à un quatrième point de connexion 44 disposé sur la boucle principale 2 en amont du deuxième échangeur bifluide 9,
la deuxième branche 5 comportant un troisième échangeur de chaleur 13 configuré pour échanger de la chaleur avec le deuxième flux d'air F2. La boucle principale 2 du circuit de liquide caloporteur 1 comporte un premier échangeur de chaleur 11 configuré pour échanger de la chaleur avec un premier flux d'air F1.

Dans l'exemple illustré, le système de conditionnement thermique 100 est un système de conditionnement thermique d'un véhicule automobile. Le premier flux d'air F1 est un flux d'air intérieur à un habitacle d'un véhicule automobile. Le deuxième flux d'air F2 est un flux d'air extérieur à un habitacle du véhicule.

On entend par flux d'air intérieur un flux d'air à destination de l'habitacle du véhicule automobile. Ce flux d'air intérieur peut circuler dans une installation de chauffage, ventilation et climatisation, souvent désignée par le terme Anglais « HVAC » signifiant « Heating, Ventilating and Air Conditioning ». Cette installation n'a pas été représentée sur les différentes figures.

On entend par flux d'air extérieur un flux d'air qui n'est pas à destination de l'habitacle du véhicule. Autrement dit, ce flux d'air reste à l'extérieur du véhicule. Un groupe moto-ventilateur, non représenté, peut être activé afin d'augmenter si nécessaire le débit du flux d'air extérieur De même, un autre groupe moto-ventilateur, également non représenté, est disposé dans l'installation de chauffage afin d'augmenter si nécessaire le débit du flux d'air intérieur.

Une unité électronique de contrôle, également non représentée, reçoit les informations de différents capteurs mesurant notamment les caractéristiques du fluide réfrigérant en divers points du circuit. L'unité électronique reçoit également les consignes demandées par les occupants du véhicule, comme par exemple la température souhaitée à l'intérieur de l'habitacle. Les consignes peuvent également provenir d'autres systèmes électroniques, par exemple du système contrôlant les batteries dans le cas d'un véhicule électrique. L'unité électronique de contrôle met en œuvre des lois de contrôle permettant le pilotage des différents actionneurs, afin d'assurer le contrôle du système de conditionnement thermique 100.

La première branche 4 du circuit de liquide caloporteur 1 est une branche de dérivation de la boucle principale 2. De même, la deuxième branche 5 du circuit de liquide caloporteur 1 est une branche de dérivation de la première branche 4.

Le troisième échangeur de chaleur 13 est disposé en amont du deuxième échangeur de chaleur 12 selon un sens d'écoulement du deuxième flux d'air F2. Ainsi, le troisième échangeur de chaleur 13 reçoit un flux d'air qui n'a subi d'échange thermique avec un autre échangeur de chaleur.

Le troisième échangeur bifluide 16 est configuré pour être couplé thermiquement avec un premier élément 25 d'une chaine de traction électrique d'un véhicule automobile.

Le premier élément 25 de la chaine de traction électrique du véhicule est configuré pour échanger de la chaleur avec le liquide caloporteur circulant dans la boucle secondaire 3 de liquide caloporteur. Le premier élément 25 de la chaine de traction électrique du véhicule comprend un moteur électrique de traction du véhicule. Le premier élément 25 de la chaine de traction électrique du véhicule peut comprendre un module électronique de pilotage d'un moteur électrique de traction du véhicule.

La boucle secondaire 3 permet d'assurer une régulation thermique de la batterie 25 afin de la maintenir dans une plage de température de fonctionnement optimale. De même, une régulation thermique du module électronique de pilotage du moteur électrique.

La boucle principale 2 du circuit de liquide caloporteur 1 et la boucle secondaire 3 du circuit de liquide caloporteur 1 sont configurées pour être en communication. Autrement dit, la boucle principale 2 et la boucle secondaire 3 peuvent être reliées fluidiquement.

La boucle secondaire 3 du circuit de liquide caloporteur 1 est reliée fluidiquement à la première branche 4 du circuit de liquide caloporteur 1. Ainsi, le circuit de liquide caloporteur 1 comporte une troisième branche 18 reliant un cinquième point de connexion 45 disposé sur la première branche 4 entre le premier point de connexion 41 et le deuxième échangeur de chaleur 12 à un sixième point de connexion 46 disposé sur la boucle secondaire 3 en aval du premier élément 25.

Le circuit de liquide caloporteur 1 comporte une quatrième branche 19 reliant un septième point de connexion 47 disposé sur la boucle secondaire 3 en amont du premier élément 25 à un huitième point de connexion 48 disposé sur la première branche 4 entre le troisième point de connexion 43 et le deuxième point de connexion 42. La troisième branche 18 est une branche de dérivation. La quatrième branche 19 est une branche de dérivation. La troisième branche 18 et la quatrième branche 19 assurent une communication fluidique entre la boucle principale 2 et la boucle secondaire 3.

Comme représenté sur la figure 1, le circuit de fluide réfrigérant 6 comporte une première branche de dérivation B reliant un premier point de raccordement 31 disposé sur la boucle principale A en aval du deuxième échangeur bifluide 9 et en amont du troisième échangeur bifluide 16 à un deuxième point de raccordement 32 disposé sur la boucle principale A en aval du troisième échangeur bifluide 16 et en amont du dispositif de compression 7, la première branche de dérivation B comportant un quatrième échangeur bifluide 20 configuré pour être couplé thermiquement avec un deuxième élément 26 d'une chaine de traction électrique du véhicule.

Le quatrième échangeur bifluide 20 est configuré pour échanger de la chaleur avec un liquide caloporteur circulant dans une boucle auxiliaire 17. Le deuxième élément 26 de la chaine de traction électrique est disposé sur la boucle auxiliaire 17 de liquide caloporteur. Le deuxième élément 26 de la chaine de traction électrique du véhicule est configuré pour échanger de la chaleur avec le liquide caloporteur de la boucle auxiliaire 17. Le deuxième élément 26 de la chaine de traction électrique du véhicule est ici une batterie de stockage d'énergie électrique. La batterie 26 peut fournir l'énergie nécessaire à la traction du véhicule. La boucle auxiliaire 17 est isolée du reste du circuit de fluide caloporteur 1.

La première branche de dérivation B comporte un deuxième dispositif de détente 22 disposé en amont du quatrième échangeur bifluide 20. Le fluide réfrigérant détendu par le deuxième dispositif de détente 22 peut ainsi s'évaporer dans le quatrième échangeur bifluide 20 et ainsi absorber de la chaleur du deuxième élément 26 de la chaine de traction électrique du véhicule afin de le refroidir.

Le premier point de raccordement 31 est disposé sur la boucle principale A du circuit de fluide réfrigérant 6 en amont du premier dispositif de détente 10.

La boucle principale A du circuit de fluide réfrigérant 6 comporte un dispositif d'accumulation de fluide réfrigérant 21 disposé en aval du troisième échangeur bifluide 16 et en amont du dispositif de compression 7.

Sur l'exemple représenté, la boucle principale A du circuit de fluide réfrigérant 6 comporte un dispositif d'accumulation de fluide réfrigérant 21 disposé en aval du troisième échangeur bifluide 16 et en amont du deuxième point de raccordement 32. Autrement dit, le fluide réfrigérant circulant dans la première branche de dérivation B regagne la boucle principale A en aval de l'accumulateur 21, et ne passe donc pas dans l'accumulateur 21.

Selon une variante non représentée, la boucle principale A du circuit de fluide réfrigérant 6 comporte un dispositif d'accumulation de fluide réfrigérant 21 disposé en aval du deuxième point de raccordement 32 et en amont du dispositif de compression 7. Dans ce cas, le fluide réfrigérant circulant dans la première branche de dérivation B regagne la boucle principale A en amont de l'accumulateur 21, et traverse donc l'accumulateur 21.

Selon un deuxième mode de réalisation, illustré sur la figure 2, le circuit de fluide réfrigérant 6 comporte également une deuxième branche de dérivation C reliant un troisième point de raccordement 33 disposé sur la boucle principale A en aval du deuxième échangeur bifluide 9 et en amont du premier point de raccordement 31 à un quatrième point de raccordement 34 disposé sur la boucle principale A en aval du troisième échangeur bifluide 16 et en amont du deuxième point de raccordement 32, la deuxième branche de dérivation C comportant successivement un troisième dispositif de détente 23 et un quatrième échangeur de chaleur 14 configuré pour échanger de la chaleur avec le premier flux d'air F1. Autrement dit, le circuit de fluide réfrigérant 6 du deuxième mode de réalisation comprend une branche de dérivation supplémentaire par rapport au premier mode de réalisation.

Le quatrième échangeur de chaleur 14 est disposé en amont du troisième échangeur de chaleur 13 selon un sens d'écoulement du premier flux d'air F1. Le quatrième échangeur de chaleur 14 et le troisième échangeur de chaleur 13 sont ici disposés dans l'installation de chauffage, ventilation et climatisation du véhicule.

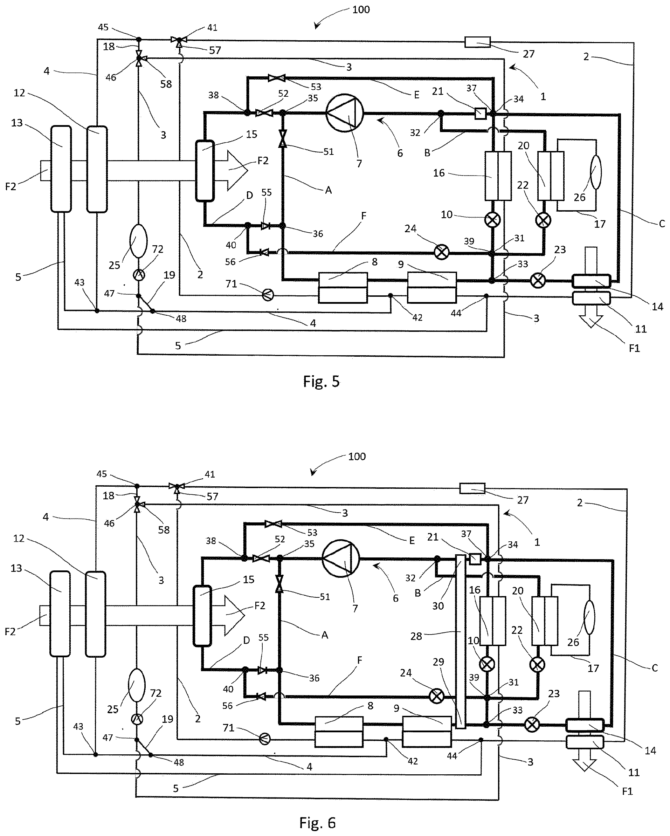

Selon un troisième mode de réalisation, illustré notamment sur la figure 5, le circuit de fluide réfrigérant 6 comporte également une troisième branche de dérivation D reliant un cinquième point de raccordement 35 disposé sur la boucle principale A en aval du dispositif de compression 7 et en amont du deuxième échangeur bifluide 9 à un sixième point de raccordement 36 disposé sur la boucle principale A en aval du cinquième point de raccordement 35, la troisième branche de dérivation D comportant un cinquième échangeur de chaleur 15 configuré pour échanger de la chaleur avec le deuxième flux d'air F2. Le cinquième échangeur de chaleur 15 est disposé en aval du deuxième échangeur de chaleur 12 selon un sens d'écoulement du deuxième flux d'air F2.

Dans le mode de réalisation de la figure 5, le circuit de fluide réfrigérant 6 comporte aussi une quatrième branche de dérivation E reliant un septième point de raccordement 37 disposé sur la boucle principale A en aval du quatrième point de raccordement 34 et en amont du dispositif de compression 7 à un huitième point de raccordement 38 disposé sur la troisième branche de dérivation D en aval du cinquième point de raccordement 35 et en amont du cinquième échangeur de chaleur 15.

Le circuit de fluide réfrigérant 6 comporte également une cinquième branche de dérivation F reliant un neuvième point de raccordement 39 disposé sur la boucle principale A en aval du troisième point de raccordement 33 et en amont du troisième échangeur bifluide 16 à un dixième point de raccordement 40 disposé sur la troisième branche de dérivation D en aval du cinquième échangeur de chaleur 15 et en amont du sixième point de raccordement 36, et la cinquième branche de dérivation F comporte un quatrième dispositif de détente 24.

Afin de simplifier les figures illustratives, le quatrième point de raccordement 34 est représenté confondu avec le septième point de raccordement 37. De même, le neuvième point de raccordement 39 est représenté confondu avec le premier point de raccordement 31. Ces points de raccordement peuvent bien sur être distincts, c'est-à-dire décalés le long d'une portion de circuit.

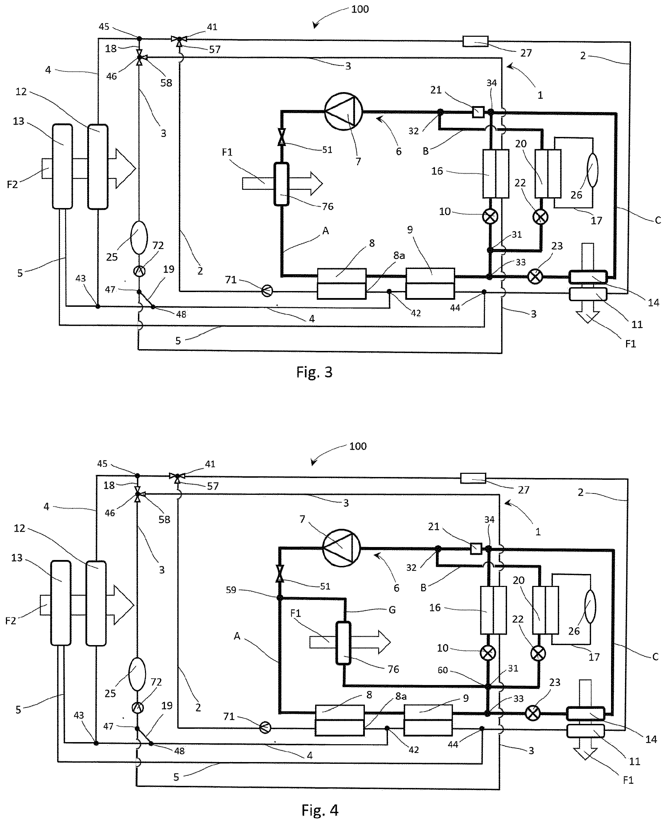

Selon une variante de réalisation, illustré sur la figure 3, la boucle principale A du circuit de fluide réfrigérant 6 comprend un sixième échangeur de chaleur 76 disposé en amont du premier dispositif de détente 10, le sixième échangeur de chaleur 76 étant configuré pour échanger de la chaleur avec le premier flux d'air F1. Le sixième échangeur de chaleur 76 permettant un échange de chaleur direct avec le premier flux d'air F1, le premier flux d'air F1 peut être chauffé de manière plus rapide que lorsque le chauffage est assuré par le premier échangeur de chaleur 11.

Sur le mode de réalisation de la figure 3, le sixième échangeur de chaleur 76 est disposé en amont du premier échangeur bifluide 8 selon le sens de parcours du fluide réfrigérant. Pour des raisons de clarté de la figure 3, le flux d'air F1 est représenté sous la forme de deux flèches F1 distinctes. Il est entendu que ces deux flèches concernent ici un même flux d'air. Le sixième échangeur de chaleur 76 est disposé en aval du quatrième échangeur de chaleur 14, selon le sens d'écoulement du flux d'air F1.

Selon le mode de réalisation illustré sur la figure 4, le circuit de fluide réfrigérant 6 comporte une sixième branche de dérivation G reliant un onzième point de raccordement 59 disposé sur la boucle principale A en amont du premier échangeur bifluide 8 à un douzième point de raccordement 60 disposé sur la boucle principale A en aval du deuxième échangeur bifluide 9, et dans lequel la sixième branche de dérivation G comprend un sixième échangeur de chaleur 76 configuré pour échanger de la chaleur avec le premier flux d'air F1. Le douzième point de raccordement 60 est en amont du premier dispositif de détente 10. Autrement dit, la sixième branche de dérivation G est une branche de contournement du premier échangeur bifluide 8 et du deuxième échangeur bifluide 9.

Le sixième échangeur de chaleur 76 est dans cette variante ajouté à la structure du deuxième mode de réalisation. Le sixième échangeur de chaleur 76 peut également être ajouté à la structure du circuit de fluide réfrigérant 6 du premier mode de réalisation, ainsi qu'à celle du troisième mode de réalisation. Ces deux variantes n'ont pas été représentées.

Le circuit de fluide réfrigérant 6 comprend plusieurs vannes d'arrêt permettant d'interdire ou d'autoriser la circulation de fluide réfrigérant dans diverses portions du circuit 6.

Ainsi, la boucle principale A du circuit de fluide réfrigérant 6 comporte une première vanne d'arrêt 51 disposée entre le cinquième point de raccordement 35 et le sixième point de raccordement 36. La troisième branche de dérivation D comporte une deuxième vanne d'arrêt 52 disposée entre le cinquième point de raccordement 35 et le huitième point de raccordement 38. La quatrième branche de dérivation E comporte une troisième vanne d'arrêt 53.

Chacune des vannes d'arrêt 51, 52, 53 est configurée pour sélectivement bloquer ou autoriser la circulation du fluide réfrigérant dans la branche de circulation sur laquelle la vanne d'arrêt est disposée. Ainsi, la deuxième vanne d'arrêt 52 est configurée pour sélectivement autoriser ou interdire le passage du fluide réfrigérant dans la troisième branche de dérivation D. La troisième vanne d'arrêt 53 est configurée pour sélectivement autoriser ou interdire le passage du fluide réfrigérant dans la quatrième branche de dérivation E.

La troisième branche de dérivation D comporte un premier clapet anti-retour 55 configuré pour bloquer une circulation du fluide réfrigérant du sixième point de raccordement 36 vers le dixième point de raccordement 40. La cinquième branche de dérivation F comporte un deuxième clapet anti-retour 56 configuré pour bloquer une circulation du fluide réfrigérant du dixième point de raccordement 40 vers le neuvième point de raccordement 39.

Le circuit de fluide caloporteur 1 comporte plusieurs pompes permettant de faire circuler le liquide caloporteur dans diverses portions du circuit 1.

Ainsi, la boucle principale 2 de liquide caloporteur comporte une première pompe 71 de circulation de liquide caloporteur. La première pompe 71 de circulation du liquide caloporteur est disposée entre le premier point de connexion 41 et le deuxième point de connexion 42. La première pompe 71 de circulation est configurée pour faire circuler le liquide caloporteur du premier échangeur bifluide 8 vers le premier point de connexion 41. Le signe 71a désigne l'entrée de la première pompe 71, et le signe 71b désigne la sortie de la première pompe 71.

La boucle secondaire 3 de liquide caloporteur comporte une deuxième pompe 72 de circulation du liquide caloporteur. La deuxième pompe 72 de circulation du liquide caloporteur est disposée sur la boucle secondaire 3 entre le septième point de connexion 47 et le sixième point de connexion 46. La deuxième pompe 72 de circulation du liquide caloporteur est configurée pour faire circuler le liquide caloporteur du septième point de connexion 47 vers le sixième point de connexion 46. Le signe 72a désigne l'entrée de la deuxième pompe 72, et le signe 72b désigne la sortie de la deuxième pompe 72.

Dans les modes de réalisation décrits, la liaison entre les différentes branches ou boucles du circuit de liquide caloporteur 1 fait intervenir des vannes trois-voies. On entend par là des vannes dans lesquelles un obturateur mobile permet de mettre en communication une voie d'entrée/sortie avec l'une ou l'autre des deux autres voies d'entrée/sortie, ou de mettre en communication les trois voies d'entrée/sortie.

La boucle principale 2 de circulation de liquide caloporteur comporte une première vanne trois-voies 57 disposée conjointement sur la boucle principale 2 et sur la première branche 4. Sur l'exemple illustré, le premier point de connexion 41 fait ici partie de la première vanne trois-voies 57. Une première voie 57a et une deuxième voie 57b de la première vanne trois-voies 57 sont disposées sur la boucle principale 2. Une troisième voie 57c de la première vanne trois-voies 57 est disposée sur la première branche 4. La première vanne trois-voies 57 permet de mettre en communication la boucle principale 2 de circulation de liquide caloporteur 2 et la première branche 4.

La boucle secondaire 3 de circulation de liquide caloporteur comporte une deuxième vanne trois-voies 58 disposée conjointement sur la boucle secondaire 3 et sur la troisième branche 18. Le sixième point de connexion 46 fait ici partie de la deuxième vanne trois-voies 58. Une première voie 58a et une deuxième voie 58b de la deuxième vanne trois-voies 58 sont disposées sur la boucle secondaire 3. Une troisième voie 58c de la deuxième vanne trois-voies 58 est disposée sur la troisième branche 18. La deuxième vanne trois-voies 58 permet de mettre en communication la boucle secondaire 3 et la première branche 4, par l'intermédiaire de la troisième branche 18 qui assure une connexion fluidique entre les deux.

Selon une variante non représentée, la troisième voie 58c de la deuxième vanne trois-voies 58 est directement reliée à la première branche 4. La troisième branche 18 n'est alors pas présente. Autrement dit, le cinquième point de connexion 45 et le sixième point de connexion 46 sont alors confondus, et font partie de la deuxième vanne trois-voies 58.

De la même manière, selon une variante non représentée la quatrième branche 19 n'est pas présente. Dans ce cas, le septième point de connexion 47 et le huitième point de connexion 48 sont confondus. La boucle secondaire 3 et la première branche 4 sont reliées directement.

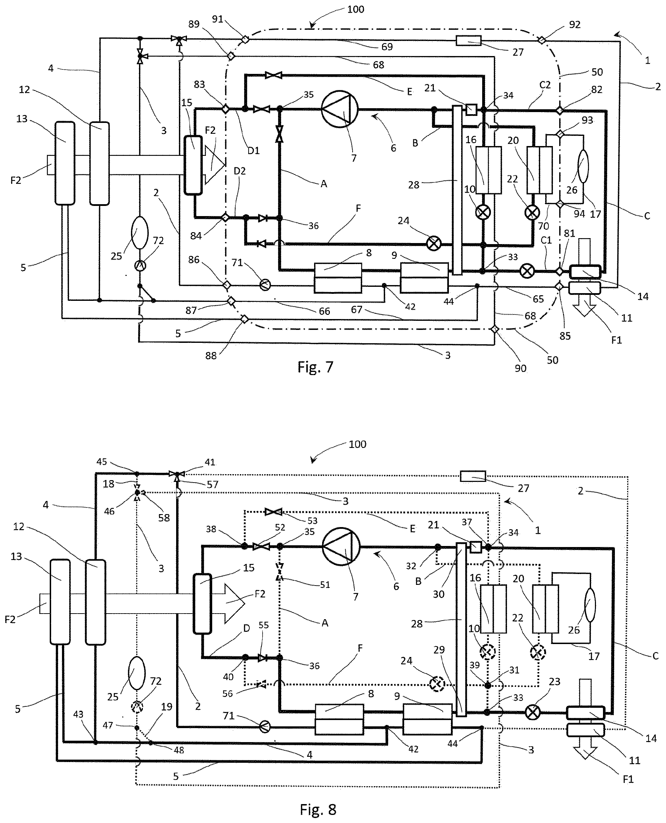

Selon des modes de réalisation illustrés notamment sur la figure 1 et la figure 7, le système de conditionnement thermique 100 comporte un carter 50 définissant un volume de réception, et la boucle principale A du circuit de fluide réfrigérant 6 est contenue à l'intérieur du carter 50.

Le carter 50 définit un volume de réception fermé dans lequel le circuit de fluide réfrigérant 6 est contenu. Le carter 50 définit un volume étanche au fluide réfrigérant.

La première branche de dérivation B du circuit de fluide réfrigérant 6 est contenue à l'intérieur du carter 50. Autrement dit, dans les modes et variantes de réalisation dans lequel le circuit de fluide réfrigérant 6 comporte uniquement la boucle principale A et la première branche de dérivation B, l'intégralité du circuit de fluide réfrigérant 6 est contenue à l'intérieur du carter 50. C'est le cas sur l'exemple de la figure 1.

Il est ainsi possible de rassembler tous les composants du circuit de fluide réfrigérant 6 à l'intérieur d'un même module. Le circuit de fluide réfrigérant 6 peut ainsi être complètement assemblé et testé avant d'être livré. Le circuit 6 de fluide réfrigérant peut ainsi être, au moment de la livraison, déjà rempli et prêt à fonctionner. Les opérations de montage sur véhicule sont donc plus rapides et plus simples puisqu'une partie du montage est assurée avant la livraison.

Selon d'autres modes de réalisation, dans lesquels le circuit de fluide réfrigérant comprend un ou des échangeurs de chaleur échangeant avec le premier flux d'air F1 ou le deuxième flux d'air F2, le carter 50 comprend des entrées/sorties vers l'extérieur. Autrement dit, dans ce cas seule une partie du circuit de fluide réfrigérant 6 est contenue dans le carter 50. C'est le cas sur l'exemple de la figure 7. Le carter 50 permet de regrouper dans un même module les principaux composants. Les échangeurs de chaleur externes au module sont connectés de manière simple au module, en fonction de la configuration souhaitée. Un module standard peut être utilisé, et les différentes options peuvent être connectées de manière simple et rapide. Le montage est facilité et est plus rapide que lorsque les différents éléments sont assemblés individuellement. Un même module standard peut être utilisé pour une large variété d'applications différentes.

La deuxième branche de dérivation C du circuit de fluide réfrigérant 6 comporte une première portion C1 contenue à l'intérieur du carter 50, le carter 50 comporte une première entrée/sortie 81 de fluide réfrigérant, la première portion C1 reliant le troisième point de raccordement 33 et la neuvième entrée/sortie 81. La deuxième branche de dérivation C du circuit de fluide réfrigérant 6 comporte une deuxième portion C2 contenue à l'intérieur du carter 50, et le carter 50 comporte une deuxième entrée/sortie 82 de fluide réfrigérant, la deuxième portion C2 reliant le quatrième point de raccordement 34 et la deuxième entrée/sortie 82.

Le troisième dispositif de détente 23 est contenu à l'intérieur du carter 50.

La troisième branche de dérivation D du circuit de fluide réfrigérant 6 comporte une troisième portion D1 contenue à l'intérieur du carter 50, et le carter 50 comporte une troisième entrée/sortie 83 de fluide réfrigérant, la troisième portion D1 reliant le cinquième point de raccordement 35 et la troisième entrée/sortie 83. La troisième branche de dérivation D du circuit de fluide réfrigérant 6 comporte une quatrième portion D2 contenue à l'intérieur du carter 50, et le carter 50 comporte une quatrième entrée/sortie 84 de fluide réfrigérant, la quatrième portion D2 reliant le sixième point de raccordement 36 et la quatrième entrée/sortie 84.

La quatrième branche de dérivation E est contenue à l'intérieur du carter 50. La cinquième branche de dérivation F est contenue à l'intérieur du carter 50. La première vanne d'arrêt 51, la deuxième vanne d'arrêt 52 et la troisième vanne d'arrêt 53 sont contenues à l'intérieur du carter 50. Le premier clapet anti-retour 55 et le deuxième clapet anti-retour 56 sont contenus à l'intérieur du carter 50. Le dispositif de compression 7 est contenu à l'intérieur du carter 50.

Le circuit de liquide caloporteur 1 peut également être en partie contenu dans le module précité.

Ainsi, la boucle principale 2 du circuit de liquide caloporteur 1 comporte une cinquième portion 65 contenue à l'intérieur du carter 50, le carter 50 comporte une cinquième entrée/sortie 85 de liquide caloporteur et une sixième entrée/sortie 86 de liquide caloporteur, la cinquième portion 65 reliant la cinquième entrée/sortie 85 et la sixième entrée/sortie 86, et le premier échangeur bifluide 8 et le deuxième échangeur bifluide 9 sont disposés sur la cinquième portion 65. On entend que l'élément désigné par le terme entrée/sortie peut être, suivant les conditions de fonctionnement, soit une entrée de liquide caloporteur dans le carter 50, soit une sortie de liquide caloporteur vers l'extérieur du carter 50.

La première branche 4 du circuit de liquide caloporteur 1 comporte une sixième portion 66 contenue à l'intérieur du carter 50, le carter 50 comporte une septième entrée/sortie 87 de liquide caloporteur, la sixième portion 66 reliant la septième entrée/sortie 87 et le deuxième point de connexion 42.

La deuxième branche 5 circuit de liquide caloporteur 1 comporte une septième portion 67 contenue à l'intérieur du carter 50, le carter de réception 1 comporte une huitième entrée/sortie 88 de liquide caloporteur, et la septième portion 67 relie la huitième entrée/sortie 88 et le quatrième point de connexion 44.

La boucle secondaire 3 circuit de liquide caloporteur 1 comporte une huitième portion 68 contenue à l'intérieur du carter 50, le carter 50 comporte une neuvième entrée/sortie 89 de liquide caloporteur et une dixième entrée/sortie 90 de liquide caloporteur, la huitième portion 68 relie la neuvième entrée/sortie 89 et la dixième entrée/sortie 90, et le troisième échangeur bifluide 16 est disposé sur la huitième portion 68.

La boucle principale 2 du circuit de liquide caloporteur 1 comporte une neuvième portion 69 contenue à l'intérieur du carter 50, le carter 50 comporte une onzième entrée/sortie 91 de liquide caloporteur et une douzième entrée/sortie 92 de liquide caloporteur, la neuvième portion 69 reliant la onzième entrée/sortie 91 et la douzième entrée/sortie 92.

La première pompe 71 de circulation de liquide caloporteur est contenue à l'intérieur du carter 50. Le deuxième point de connexion 42 est disposé à l'intérieur du carter 50.

La boucle principale 2 du circuit 1 de liquide caloporteur comporte un dispositif de chauffage électrique 27 configuré pour chauffer le liquide caloporteur. Le dispositif de chauffage électrique 27 vient compléter le chauffage du liquide caloporteur fourni par le premier échangeur bifluide 8 et le deuxième échangeur bifluide 9. L'activation du chauffage électrique 27 permet notamment de réduire le temps de réponse du système de conditionnement thermique.

Selon un exemple de réalisation non représenté, le dispositif de chauffage électrique 27 est disposé à l'extérieur du carter 50.

Sur les exemples schématisés sur la figure 1 et sur la figure 6, le dispositif de chauffage électrique 27 est contenu à l'intérieur du carter 50. Le dispositif de chauffage électrique 27 est disposé sur la neuvième portion 69.

La boucle auxiliaire 17 du circuit de liquide caloporteur 1 comporte une dixième portion 70 contenue à l'intérieur du carter 50, le carter 50 comporte une treizième entrée/sortie 93 de liquide caloporteur et une quatorzième entrée/sortie 94 de liquide caloporteur, la dixième portion 70a reliant la treizième entrée/sortie 91 et la quatorzième entrée/sortie 94, et le quatrième échangeur bifluide 20 est disposé sur la dixième portion 70

Chaque entrée/sortie disposée sur le circuit de liquide caloporteur 1 permet le raccordement d'une portion de circuit contenue à l'intérieur du carter 50 avec une portion de circuit disposée à l'extérieur du carter 50. Divers types de raccord peuvent être utilisés. Les raccords n'ont pas été représentés en détail sur les figures. De même, chaque entrée/sortie disposée sur le circuit de fluide réfrigérant 6 permet le raccordement d'une portion de circuit contenue à l'intérieur du carter 50 avec une portion de circuit disposée à l'extérieur du carter 50.

Selon la variante du troisième mode de réalisation illustrée sur la figure 6, la boucle principale A comprend un échangeur de chaleur interne 28, l'échangeur de chaleur interne 28 comportant une première section d'échange thermique 29 disposée en aval du deuxième échangeur bifluide 9 et en amont du premier point de raccordement 31 et une deuxième section d'échange thermique 30 disposée en aval du dispositif d'accumulation de fluide réfrigérant 21 et en amont du dispositif de compression 7, l'échangeur de chaleur interne 28 étant configuré pour permettre un échange de chaleur entre le fluide réfrigérant dans la première section d'échange thermique 29 et le fluide réfrigérant dans la deuxième section d'échange thermique 30.

Selon la quatrième mode de réalisation, l'échangeur de chaleur interne 28 est disposé à l'intérieur du carter 50.

Le carter 50 a été représenté dans le cadre du premier mode de réalisation, sur la figure 1, ainsi que dans le cadre du quatrième mode de réalisation, sur la figure 6. Le carter 50 peut tout à fait être utilisé également pour les autres modes de réalisation et variantes, décrits sur les figures 2, 3, et 4.

Le système de conditionnement thermique 100 décrit préalablement peut fonctionner suivant de nombreux modes de fonctionnement, c'est-à-dire mettre en œuvre de nombreux procédés de fonctionnement différents. Quelques uns seront décrits ci-dessous, et illustrés sur les figures 7 à 9. Sur ces figures, les portions de circuit dans lesquelles du fluide réfrigérant ou du liquide caloporteur circulent sont représentées en traits épais. Les portions dans lesquelles le fluide réfrigérant ne circulent pas sont représentées en traits pointillés. De même, les portions dans lesquelles le liquide caloporteur ne circulent pas sont également en traits pointillés.

Selon un procédé de fonctionnement d'un système de conditionnement thermique tel que décrit précédemment, dans un mode dit de refroidissement, schématisé sur la figure 8:
- le fluide réfrigérant circule dans le dispositif de compression 7 où il passe à haute pression, et circule successivement dans le cinquième échangeur de chaleur 15 où il cède de la chaleur au deuxième flux d'air F2, dans le premier échangeur bifluide 8, dans le deuxième échangeur bifluide 9, dans le troisième dispositif de détente 23 où il passe à basse pression, dans le quatrième échangeur de chaleur 14 où il absorbe de la chaleur du premier flux d'air F1, le fluide réfrigérant à basse pression retournant au dispositif de compression 7,
- le liquide caloporteur circule successivement dans le deuxième échangeur bifluide 9, dans le premier échangeur bifluide 8, dans le deuxième échangeur de chaleur 12 où il cède de la chaleur au deuxième flux d'air F2,

se divise en un premier débit circulant dans la première branche 4 et un deuxième débit circulant dans la deuxième branche 5,
le premier débit rejoignant la boucle principale 2 en amont du premier échangeur bifluide 8 et le deuxième débit rejoignant la boucle principale 2 en amont du deuxième échangeur bifluide 9.

Dans ce mode de fonctionnement, le cinquième échangeur de chaleur 15 fonctionne en condenseur, et dissipe dans le deuxième flux d'air F2 la chaleur du fluide réfrigérant à haute pression et haute température en sortie du compresseur 7. Suivant les conditions de fonctionnement, le premier échangeur bifluide 8 achève la condensation ou assure un sous-refroidissement du fluide réfrigérant. Le deuxième échangeur bifluide 9, qui est couplé avec le troisième échangeur de chaleur 13 recevant le premier flux d'air F1 le plus frais, assure un sous-refroidissement du fluide réfrigérant. La détente dans le troisième dispositif de détente 23 du fluide réfrigérant sous-refroidi assure ainsi un refroidissement particulièrement efficace du premier flux d'air F1 qui traverse le quatrième échangeur de chaleur 14. Lorsqu'il est présent, l'échangeur de chaleur interne 28 augmente encore l'échange de chaleur réalisé et donc le refroidissement du premier flux d'air F1. Le liquide caloporteur ayant traversé le premier échangeur bifluide 8 traverse le deuxième échangeur de chaleur 12 et dissipe de la chaleur dans le deuxième flux d'air F2. Une partie du débit de liquide caloporteur sortant du deuxième échangeur de chaleur 12 reste dans la première branche 4 et rejoint la boucle principale 2 entre les deux échangeurs bifluide 8, 9 au niveau du deuxième point de connexion 42. La partie complémentaire du débit de liquide caloporteur emprunte la deuxième branche 5, traverse le troisième échangeur de chaleur 13 et regagne la boucle principale 2 en amont du deuxième échangeur bifluide 9. Le deuxième échangeur bifluide 9 reçoit donc du liquide caloporteur à une température plus basse que celle du liquide caloporteur reçu par le premier échangeur bifluide 8. Selon le mode de réalisation représenté, la répartition au niveau du troisième point de connexion 43 entre le débit restant dans la première branche 4 et le débit passant dans la deuxième branche 5 se fait en fonction des pertes de charges relatives de la première branche entre le troisième point de connexion 43 et le deuxième point de connexion 42, et de la portion de circuit comprenant la deuxième branche 5 entre les points 43 et 44 ainsi que la portion de boucle principale 2 comprise entre le point 44 et le point 42. En pratique, le débit dans la première branche 4 est supérieur au débit dans la deuxième branche 5. Le deuxième échangeur bifluide 9 reçoit ainsi du liquide caloporteur à basse température, ce qui permet d'assurer un sous-refroidissement très efficace du fluide réfrigérant. La capacité de refroidissement du premier flux d'air F1 est ainsi maximisée.

Sur le circuit de fluide réfrigérant 6, la première vanne d'arrêt 51 et la troisième vanne d'arrêt 53 sont fermées, la deuxième vanne d'arrêt 52 est ouverte. Le premier détendeur 10, le deuxième détendeur 22 et le quatrième détendeur 24 sont en position fermée et empêchent le passage du fluide réfrigérant. Sur le circuit de liquide caloporteur 1, la vanne trois-voies 57 oriente le liquide caloporteur sortant de la pompe 71 vers la première branche 4, et empêche la circulation du liquide caloporteur vers le premier échangeur de chaleur 11.

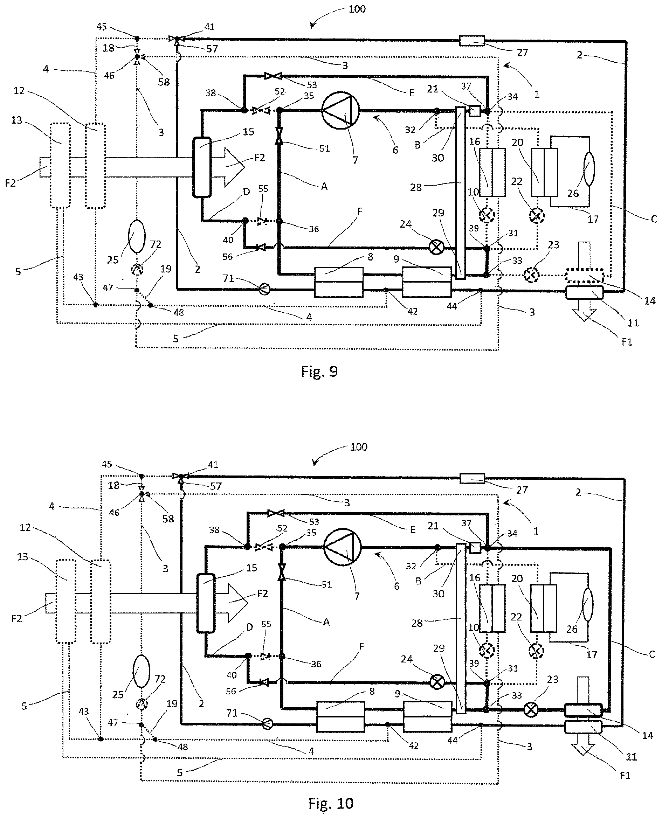

Selon un procédé de fonctionnement d'un système de conditionnement thermique tel que décrit précédemment, dans un mode dit de chauffage, schématisé sur la figure 9:
- le fluide réfrigérant circule dans le dispositif de compression 7 où il passe à haute pression, et circule successivement dans le premier échangeur bifluide 8 où il cède de la chaleur au liquide caloporteur, dans le deuxième échangeur bifluide 9 où il cède de la chaleur au liquide caloporteur, dans le quatrième dispositif de détente 24 où il passe à basse pression, dans le cinquième échangeur de chaleur 15 où il absorbe de la chaleur du deuxième flux d'air F2, le fluide réfrigérant à basse pression retournant au dispositif de compression 7,
- le liquide caloporteur circule successivement dans le deuxième échangeur bifluide 9 où il reçoit de la chaleur du fluide réfrigérant, dans le premier échangeur bifluide 8 où il reçoit de la chaleur du fluide réfrigérant, dans le premier échangeur de chaleur 11 où il cède de la chaleur au premier flux d'air F1.

Dans ce mode de fonctionnement, le premier échangeur bifluide 8 fonctionne en condenseur, et dissipe la chaleur du fluide réfrigérant à haute pression et haute température dans le liquide caloporteur de la boucle principale 2. Le deuxième échangeur bifluide 9 achève la condensation et dissipe également de la chaleur dans le liquide caloporteur. Le liquide caloporteur circule dans le premier échangeur de chaleur 11, qui assure ainsi le chauffage du premier flux d'air F1. Le dispositif de chauffage additionnel 27 peut être activé afin d'augmenter la température du liquide caloporteur. La vanne trois-voies 57 empêche la circulation de fluide réfrigérant dans la première branche 4, et donc à fortiori dans la deuxième branche 5. La détente du fluide réfrigérant dans le quatrième dispositif de détente 24 fait passer le liquide réfrigérant à basse pression, et celui-ci s'évapore en traversant le cinquième échangeur de chaleur 15, en prélevant de la chaleur sur le deuxième flux d'air F2. Le fluide réfrigérant à basse pression emprunte ensuite la quatrième branche de dérivation E et rejoint la boucle principale A en amont du dispositif d'accumulation 21. Pour permettre ce mode de circulation du fluide réfrigérant, la deuxième vanne d'arrêt 52 est fermée. La première vanne d'arrêt 51 et la troisième vanne d'arrêt 53 sont ouvertes.

Selon un procédé de fonctionnement d'un système de conditionnement thermique tel que décrit précédemment, dans un mode dit de déshumidification parallèle, schématisé sur la figure 10:
- le fluide réfrigérant circule dans le dispositif de compression 7 où il passe à haute pression, et circule successivement dans le premier échangeur bifluide 8 où il cède de la chaleur au liquide caloporteur, dans le deuxième échangeur bifluide 9 où il cède de la chaleur au liquide caloporteur, se divise entre un premier débit et un deuxième débit,
   le premier débit circulant dans le quatrième dispositif de détente 24 où il passe à basse pression, dans le cinquième échangeur de chaleur 15 où il absorbe de la chaleur du deuxième flux d'air F2,
   le deuxième débit circulant dans le troisième dispositif de détente 23 où il passe à basse pression, dans le quatrième échangeur de chaleur 14 où il absorbe de la chaleur du premier flux d'air F1,
   le premier débit de fluide réfrigérant à basse pression et le deuxième débit de fluide réfrigérant à basse pression se rejoignant avant de rejoindre le dispositif de compression 7,
- le liquide caloporteur circule successivement dans le deuxième échangeur bifluide 9 où il reçoit de la chaleur du fluide réfrigérant, dans le premier échangeur bifluide 8 où il reçoit de la chaleur du fluide réfrigérant, dans le premier échangeur de chaleur 11 où il cède de la chaleur au premier flux d'air F1.

Ce mode de fonctionne diffère du précédent en ce que une partie du débit de fluide réfrigérant sortant du deuxième échangeur bifluide 9 circule dans la deuxième branche de dérivation C et traverse le quatrième échangeur de chaleur 14 après avoir été détendu dans le troisième dispositif de détente 23. Le premier flux d'air F1 est donc refroidi en traversant le quatrième échangeur de chaleur 14, et est réchauffé en traversant ensuite le premier échangeur de chaleur 11. Le premier flux d'air F1 est ainsi déshumidifié. La répartition entre le débit de fluide réfrigérant traversant le cinquième échangeur de chaleur 15 et le débit de fluide réfrigérant traversant le quatrième échangeur de chaleur 14 se fait en position de la section efficace du quatrième détendeur 24 et du troisième détendeur 23.

De nombreux autres modes de fonctionnement sont possibles. En particulier, un degré d'ouverture du premier dispositif de détente 10, associé à une circulation de liquide caloporteur dans la boucle secondaire 3, permet d'assurer un refroidissement du premier élément 25. De même, un degré d'ouverture du deuxième dispositif de détente 22 permet d'assurer un refroidissement du deuxième élément 26.

## Revendications

1. Système de conditionnement thermique (100), comportant :
- un circuit de liquide caloporteur (1) comportant :
une boucle principale (2) de circulation, une boucle secondaire (3), une première branche (4), une deuxième branche (5),
- un circuit de fluide réfrigérant (6) comprenant une boucle principale (A) de circulation de fluide réfrigérant comportant successivement selon un sens de circulation du fluide réfrigérant:
-- un dispositif de compression (7),
-- un premier échangeur bifluide (8) agencé conjointement sur le circuit de fluide réfrigérant (6) et sur la boucle principale (2) du circuit de liquide caloporteur (1) de façon à permettre un échange de chaleur entre le fluide réfrigérant et le liquide caloporteur de la boucle principale (2),
-- un deuxième échangeur bifluide (9) agencé conjointement sur le circuit de fluide réfrigérant (6) et sur la boucle principale (2) du circuit de liquide caloporteur (1) de façon à permettre un échange de chaleur entre le fluide réfrigérant et le liquide caloporteur de la boucle principale (2),
-- un premier dispositif de détente (10),
-- un troisième échangeur bifluide (16) agencé conjointement sur le circuit de fluide réfrigérant (6) et sur la boucle secondaire (3) du circuit de liquide caloporteur (1) de façon à permettre un échange de chaleur entre le fluide réfrigérant et le liquide caloporteur de la boucle secondaire (3),
dans lequel la première branche (4) du circuit de liquide caloporteur (1) relie un premier point de connexion (41) disposé sur la boucle principale (2) à un deuxième point de connexion (42) disposé sur la boucle principale (2), la première branche (4) étant configurée pour que le liquide caloporteur en sortie du premier échangeur bifluide (8) regagne une entrée (8a) du premier échangeur bifluide (8) sans passer par le deuxième échangeur bifluide (9), la première branche (4) comportant un deuxième échangeur de chaleur (12) configuré pour échanger de la chaleur avec un deuxième flux d'air (F2),
et dans lequel la deuxième branche (5) du circuit de liquide caloporteur (1) relie un troisième point de connexion (43) disposé sur la première branche (4) en aval du deuxième échangeur de chaleur (12) à un quatrième point de connexion (44) disposé sur la boucle principale (2) en amont du deuxième échangeur bifluide (9),
la deuxième branche (5) comportant un troisième échangeur de chaleur (13) configuré pour échanger de la chaleur avec le deuxième flux d'air (F2).

2. Système de conditionnement thermique selon la revendication 1, dans lequel la boucle principale (2) du circuit de liquide caloporteur (1) comporte un premier échangeur de chaleur (11) configuré pour échanger de la chaleur avec un premier flux d'air (F1).

3. Système de conditionnement thermique selon la revendication 2, dans lequel le premier flux d'air (F1) est un flux d'air intérieur à un habitacle d'un véhicule automobile, et dans lequel le deuxième flux d'air (F2) est un flux d'air extérieur à un habitacle du véhicule.

4. Système de conditionnement thermique selon l'une des revendications précédentes, dans lequel le troisième échangeur de chaleur (13) est disposé en amont du deuxième échangeur de chaleur (12) selon un sens d'écoulement du deuxième flux d'air (F2).

5. Système de conditionnement thermique selon l'une des revendications précédentes, dans lequel le troisième échangeur bifluide (16) est configuré pour être couplé thermiquement avec un premier élément (25) d'une chaine de traction électrique d'un véhicule automobile.

6. Système de conditionnement thermique selon l'une des revendications précédentes, dans lequel le circuit de fluide réfrigérant (6) comporte une première branche de dérivation (B) reliant un premier point de raccordement (31) disposé sur la boucle principale (A) en aval du deuxième échangeur bifluide (9) et en amont du troisième échangeur bifluide (16) à un deuxième point de raccordement (32) disposé sur la boucle principale (A) en aval du troisième échangeur bifluide (16) et en amont du dispositif de compression (7), la première branche de dérivation (B) comportant un quatrième échangeur bifluide (20) configuré pour être couplé thermiquement avec un deuxième élément (26) d'une chaine de traction électrique du véhicule.

7. Système de conditionnement thermique selon la revendication précédente, dans lequel la boucle principale (A) du circuit de fluide réfrigérant (6) comporte un dispositif d'accumulation de fluide réfrigérant (21) disposé en aval du troisième échangeur bifluide (16) et en amont du deuxième point de raccordement (32).

8. Système de conditionnement thermique selon la revendication 6 ou 7, dans lequel le circuit de fluide réfrigérant (6) comporte une deuxième branche de dérivation (C) reliant un troisième point de raccordement (33) disposé sur la boucle principale (A) en aval du deuxième échangeur bifluide (9) et en amont du premier point de raccordement (31) à un quatrième point de raccordement (34) disposé sur la boucle principale (A) en aval du troisième échangeur bifluide (16) et en amont du deuxième point de raccordement (32), la deuxième branche de dérivation (C) comportant successivement un troisième dispositif de détente (23) et un quatrième échangeur de chaleur (14) configuré pour échanger de la chaleur avec le premier flux d'air (F1).

9. Système de conditionnement thermique selon l'une des revendications précédentes, dans lequel le circuit de fluide réfrigérant (6) comporte une troisième branche de dérivation (D) reliant un cinquième point de raccordement (35) disposé sur la boucle principale (A) en aval du dispositif de compression (7) et en amont du deuxième échangeur bifluide (9) à un sixième point de raccordement (36) disposé sur la boucle principale (A) en aval du cinquième point de raccordement (35), la troisième branche de dérivation (D) comportant un cinquième échangeur de chaleur (15) configuré pour échanger de la chaleur avec le deuxième flux d'air (F2).

10. Système de conditionnement thermique selon la revendication 9 en combinaison avec la revendication 8, dans lequel le circuit de fluide réfrigérant (6) comporte une quatrième branche de dérivation (E) reliant un septième point de raccordement (37) disposé sur la boucle principale (A) en aval du quatrième point de raccordement (34) et en amont du dispositif de compression (7) à un huitième point de raccordement (38) disposé sur la troisième branche de dérivation (D) en aval du cinquième point de raccordement (35) et en amont du cinquième échangeur de chaleur (15) ], dans lequel le circuit de fluide réfrigérant (6) comporte une cinquième branche de dérivation (F) reliant un neuvième point de raccordement (39) disposé sur la boucle principale (A) en aval du troisième point de raccordement (33) et en amont du troisième échangeur bifluide (16) à un dixième point de raccordement (40) disposé sur la troisième branche de dérivation (D) en aval du cinquième échangeur de chaleur (15) et en amont du sixième point de raccordement (36), et dans lequel la cinquième branche de dérivation (F) comporte un quatrième dispositif de détente (24).

11. Système de conditionnement thermique selon l'une des revendications 1 à 10, dans lequel la boucle principale (A) du circuit de fluide réfrigérant (6) comprend un sixième échangeur de chaleur (76) disposé en amont du premier dispositif de détente (10), le sixième échangeur de chaleur (76) étant configuré pour échanger de la chaleur avec le premier flux d'air (F1).

12. Système de conditionnement thermique selon l'une des revendications 1 à 10, dans lequel le circuit de fluide réfrigérant (6) comporte une sixième branche de dérivation (G) reliant un onzième point de raccordement (59) disposé sur la boucle principale (A) en amont du premier échangeur bifluide (8) à un douzième point de raccordement (60) disposé sur la boucle principale (A) en aval du deuxième échangeur bifluide (9), et dans lequel la sixième branche de dérivation (G) comprend un sixième échangeur de chaleur (76) configuré pour échanger de la chaleur avec le premier flux d'air (F1).

13. Système de conditionnement thermique (100) selon l'une des revendications précédentes en combinaison avec la revendication 6, comportant un carter (50) définissant un volume de réception,
dans lequel la boucle principale (A) du circuit de fluide réfrigérant (6) est contenue à l'intérieur du carter (50) et dans lequel la première branche de dérivation (B) du circuit de fluide réfrigérant (6) est contenue à l'intérieur du carter (50).

14. Système de conditionnement thermique selon la revendication précédente en combinaison avec la revendication 8, dans lequel la deuxième branche de dérivation (C) du circuit de fluide réfrigérant (6) comporte une première portion (C1) contenue à l'intérieur du carter (50), dans lequel le carter (50) comporte une première entrée/sortie (81) de fluide réfrigérant, la première portion (C1) reliant le troisième point de raccordement (33) et la neuvième entrée/sortie (81), et dans lequel la deuxième branche de dérivation (C) du circuit de fluide réfrigérant (6) comporte une deuxième portion (C2) contenue à l'intérieur du carter (50), dans lequel le carter (50) comporte une deuxième entrée/sortie (82) de fluide réfrigérant, la deuxième portion (C2) reliant le quatrième point de raccordement (34) et la deuxième entrée/sortie (82).

15. Système de conditionnement thermique selon la revendication 13 ou 14, dans lequel la boucle principale (2) du circuit de liquide caloporteur (1) comporte une cinquième portion (65) contenue à l'intérieur du carter (50), dans lequel le carter (50) comporte une cinquième entrée/sortie (85) de liquide caloporteur et une sixième entrée/sortie (86) de liquide caloporteur, la cinquième portion (65) reliant la cinquième entrée/sortie (85) et la sixième entrée/sortie (86), dans lequel le premier échangeur bifluide (8) et le deuxième échangeur bifluide (9) sont disposés sur la cinquième portion (65),
dans lequel la première branche (4) du circuit de liquide caloporteur (1) comporte une sixième portion (66) contenue à l'intérieur du carter (50), et dans lequel le carter (50) comporte une septième entrée/sortie (87) de liquide caloporteur, la sixième portion (66) reliant la septième entrée/sortie (87) et le deuxième point de connexion (42).

## Patentansprüche

1. Wärmekonditionierungssystem (100), umfassend:
- einen Wärmeträgerflüssigkeitskreislauf (1), umfassend:
eine Hauptumlaufschleife (2), eine sekundäre Schleife (3), einen ersten Zweig (4), einen zweiten Zweig (5),
- einen Kältemittelkreislauf (6), der eine Hauptumlaufschleife (A) für ein Kältemittel beinhaltet, die nacheinander gemäß einer Umlaufrichtung des Kältemittels Folgendes umfasst:
-- eine Kompressionsvorrichtung (7),
-- einen ersten Doppelfluidtauscher (8), der sowohl in dem Kältemittelkreislauf (6) als auch in der Hauptschleife (2) des Wärmeträgerflüssigkeitskreislaufs (1) eingerichtet ist, sodass er einen Wärmeaustausch zwischen dem Kältemittel und der Wärmeträgerflüssigkeit der Hauptschleife (2) ermöglicht,
-- einen zweiten Doppelfluidtauscher (9), der sowohl in dem Kältemittelkreislauf (6) als auch in der Hauptschleife (2) des Wärmeträgerflüssigkeitskreislaufs (1) eingerichtet ist, sodass er einen Wärmeaustausch zwischen dem Kältemittel und der Wärmeträgerflüssigkeit der Hauptschleife (2) ermöglicht,
-- eine erste Entspannungsvorrichtung (10),
-- einen dritten Doppelfluidtauscher (16), der sowohl in dem Kältemittelkreislauf (6) als auch in der sekundären Schleife (3) des Wärmeträgerflüssigkeitskreislaufs (1) eingerichtet ist, sodass er einen Wärmeaustausch zwischen dem Kältemittel und der Wärmeträgerflüssigkeit der sekundären Schleife (3) ermöglicht,
wobei der erste Zweig (4) des Wärmeträgerflüssigkeitskreislaufs (1) einen ersten Verbindungspunkt (41), der in der Hauptschleife (2) angeordnet ist, mit einem zweiten Verbindungspunkt (42), der in der Hauptschleife (2) angeordnet ist, verbindet, wobei der erste Zweig (4) so konfiguriert ist, dass die Wärmeträgerflüssigkeit am Ausgang des ersten Doppelfluidtauschers (8) zu einem Eingang (8a) des ersten Doppelfluidtauschers (8) zurückkehrt, ohne dabei durch den zweiten Doppelfluidtauscher (9) hindurchzugehen, wobei der erste Zweig (4) einen zweiten Wärmetauscher (12) umfasst, der dazu konfiguriert ist, Wärme mit einem zweiten Luftstrom (F2) auszutauschen,
und wobei der zweite Zweig (5) des Wärmeträgerflüssigkeitskreislaufs (1) einen dritten Verbindungspunkt (43), der in dem ersten Zweig (4) stromabwärts des zweiten Wärmetauschers (12) angeordnet ist, mit einem vierten Verbindungspunkt (44), der in der Hauptschleife (2) stromaufwärts des zweiten Doppelfluidtauschers (9) angeordnet ist, verbindet, wobei der zweite Zweig (5) einen dritten Wärmetauscher (13) umfasst, der dazu konfiguriert ist, Wärme mit dem zweiten Luftstrom (F2) auszutauschen.

2. Wärmekonditionierungssystem nach Anspruch 1, wobei die Hauptschleife (2) des Wärmeträgerflüssigkeitskreislaufs (1) einen ersten Wärmetauscher (11) umfasst, der dazu konfiguriert ist, Wärme mit einem ersten Luftstrom (F1) auszutauschen.

3. Wärmekonditionierungssystem nach Anspruch 2, wobei der erste Luftstrom (F1) ein in Bezug auf einen Fahrgastraum eines Kraftfahrzeugs interner Luftstrom ist und wobei der zweite Luftstrom (F2) ein in Bezug auf einen Fahrgastraum des Kraftfahrzeugs externer Luftstrom ist.

4. Wärmekonditionierungssystem nach einem der vorhergehenden Ansprüche, wobei der dritte Wärmetauscher (13) gemäß einer Strömungsrichtung des zweiten Luftstroms (F2) stromaufwärts des zweiten Wärmetauschers (12) angeordnet ist.

5. Wärmekonditionierungssystem nach einem der vorhergehenden Ansprüche, wobei der dritte Doppelfluidtauscher (16) dazu konfiguriert ist, mit einem ersten Element (25) eines elektrischen Antriebsstrangs eines Kraftfahrzeugs thermisch gekoppelt zu sein.

6. Wärmekonditionierungssystem nach einem der vorhergehenden Ansprüche, wobei der Kältemittelkreislauf (6) einen ersten Umgehungszweig (B) umfasst, der einen ersten Anschlusspunkt (31), der in der Hauptschleife (A) stromabwärts des zweiten Doppelfluidtauschers (9) und stromaufwärts des dritten Doppelfluidtauschers (16) angeordnet ist, mit einem zweiten Anschlusspunkt (32), der in der Hauptschleife (A) stromabwärts des dritten Doppelfluidtauschers (16) und stromaufwärts der Kompressionsvorrichtung (7) angeordnet ist, verbindet, wobei der erste Umgehungszweig (B) einen vierten Doppelfluidtauscher (20) umfasst, der dazu konfiguriert ist, mit einem zweiten Element (26) eines elektrischen Antriebsstrangs des Fahrzeugs thermisch gekoppelt zu sein.

7. Wärmekonditionierungssystem nach dem vorhergehenden Anschluss, wobei die Hauptschleife (A) des Kältemittelkreislaufs (6) eine Kältemittelspeichervorrichtung (21) umfasst, die stromabwärts des dritten Doppelfluidtauschers (16) und stromaufwärts des zweiten Anschlusspunkts (32) angeordnet ist.

8. Wärmekonditionierungssystem nach Anspruch 6 oder 7, wobei der Kältemittelkreislauf (6) einen zweiten Umgehungszweig (C) umfasst, der einen dritten Anschlusspunkt (33), der in der Hauptschleife (A) stromabwärts des zweiten Doppelfluidtauschers (9) und stromaufwärts des ersten Anschlusspunkts (31) angeordnet ist, mit einem vierten Anschlusspunkt (34), der in der Hauptschleife (A) stromabwärts des dritten Doppelfluidtauschers (16) und stromaufwärts des zweiten Anschlusspunkts (32) angeordnet ist, verbindet, wobei der zweite Umgehungszweig (C) nacheinander eine dritte Entspannungsvorrichtung (23) und einen vierten Wärmetauscher (14), der dazu konfiguriert ist, Wärme mit dem ersten Luftstrom (F1) auszutauschen, umfasst.

9. Wärmekonditionierungssystem nach einem der vorhergehenden Ansprüche, wobei der Kältemittelkreislauf (6) einen dritten Umgehungszweig (D) umfasst, der einen fünften Anschlusspunkt (35), der in der Hauptschleife (A) stromabwärts der Kompressionsvorrichtung (7) und stromaufwärts des zweiten Doppelfluidtauschers (9) angeordnet ist, mit einem sechsten Anschlusspunkt (36), der in der Hauptschleife (A) stromabwärts des fünften Anschlusspunkts (35) angeordnet ist, verbindet, wobei der dritte Umgehungszweig (D) einen fünften Wärmetauscher (15) umfasst, der dazu konfiguriert ist, Wärme mit dem zweiten Luftstrom (F2) auszutauschen.

10. Wärmekonditionierungssystem nach Anspruch 9 in Kombination mit Anspruch 8, wobei der Kältemittelkreislauf (6) einen vierten Umgehungszweig (E) umfasst, der einen siebten Anschlusspunkt (37), der in der Hauptschleife (A) stromabwärts des vierten Anschlusspunkts (34) und stromaufwärts der Kompressionsvorrichtung (7) angeordnet ist, mit einem achten Anschlusspunkt (38), der in dem dritten Umgehungszweig (D) stromabwärts des fünften Anschlusspunkts (35) und stromaufwärts des fünften Wärmetauscher (15) angeordnet ist, verbindet, wobei der Kältemittelkreislauf (6) einen fünften Umgehungszweig (F) umfasst, der einen neunten Anschlusspunkt (39), der in der Hauptschleife (A) stromabwärts des dritten Anschlusspunkts (33) und stromaufwärts des dritten Doppelfluidwärmetauschers (16) angeordnet ist, mit einem zehnten Anschlusspunkt (40), der in dem dritten Umgehungszweig (D) stromabwärts des fünften Wärmetauschers (15) und stromaufwärts des sechsten Anschlusspunkts (36) angeordnet ist, verbindet, und wobei der fünfte Umgehungszweig (F) eine vierte Entspannungsvorrichtung (24) umfasst.

11. Wärmekonditionierungssystem nach einem der Ansprüche 1 bis 10, wobei die Hauptschleife (A) des Kältemittelkreislaufs (6) einen sechsten Wärmetauscher (76) beinhaltet, der stromaufwärts der ersten Entspannungsvorrichtung (10) angeordnet ist, wobei der sechste Wärmetauscher (76) dazu konfiguriert ist, Wärme mit dem ersten Luftstrom (F1) auszutauschen.

12. Wärmekonditionierungssystem nach einem der Ansprüche 1 bis 10, wobei der Kältemittelkreislauf (6) einen sechsten Umgehungszweig (G) umfasst, der einen elften Anschlusspunkt (59), der in der Hauptschleife (A) stromaufwärts des ersten Doppelfluidtauschers (8) angeordnet ist, mit einem zwölften Anschlusspunkt (60), der in der Hauptschleife (A) stromabwärts des zweiten Doppelfluidtauschers (9) angeordnet ist, verbindet, und wobei der sechste Umgehungszweig (G) einen sechsten Wärmetauscher (76) umfasst, der dazu konfiguriert ist, Wärme mit dem ersten Luftstrom (F1) auszutauschen.

13. Wärmekonditionierungssystem (100) nach einem der vorhergehenden Ansprüche in Kombination mit Anspruch 6, umfassend ein Gehäuse (50), das ein Aufnahmevolumen definiert,
wobei die Hauptschleife (A) des Kältemittelkreislaufs (6) im Inneren des Gehäuses (50) enthalten ist und wobei der erste Umgehungszweig (B) des Kältemittelkreislaufs (6) im Inneren des Gehäuses (50) enthalten ist.

14. Wärmekonditionierungssystem nach dem vorhergehenden Anspruch in Kombination mit Anspruch 8, wobei der zweite Umgehungszweig (C) des Kältemittelkreislaufs (6) einen ersten Abschnitt (C1) umfasst, der im Inneren des Gehäuses (50) enthalten ist, wobei das Gehäuse (50) einen ersten Kältemitteleingang/-ausgang (81) umfasst, wobei der erste Abschnitt (C1) den dritten Anschlusspunkt (33) und den neunten Eingang/Ausgang (81) verbindet, und wobei der zweite Umgehungszweig (C) des Kältemittelkreislaufs (6) einen zweiten Abschnitt (C2) umfasst, der im Inneren des Gehäuses (50) enthalten ist, wobei das Gehäuse (50) einen zweiten Kältemitteleingang/-ausgang (82) umfasst, wobei der zweite Abschnitt (C2) den vierten Anschlusspunkt (34) und den zweiten Eingang/Ausgang (82) verbindet.

15. Wärmekonditionierungssystem nach Anspruch 13 oder 14, wobei die Hauptschleife (2) des Wärmeträgerflüssigkeitskreislaufs (1) einen fünften Abschnitt (65) umfasst, der im Inneren des Gehäuses (50) enthalten ist, wobei das Gehäuse (50) einen fünften Wärmeträgerflüssigkeitseingang/-ausgang (85) und einen sechsten Wärmeträgerflüssigkeitseingang/-ausgang (86) umfasst, wobei der fünfte Abschnitt (65) den fünften Eingang/Ausgang (85) und den sechsten Eingang/Ausgang (86) verbindet, wobei der erste Doppelfluidtauscher (8) und der zweite Doppelfluidtauscher (9) in dem fünften Abschnitt (65) angeordnet sind,
wobei der erste Zweig (4) des Wärmeträgerflüssigkeitskreislaufs (1) einen sechsten Abschnitt (66) umfasst, der im Inneren des Gehäuses (50) enthalten ist, und wobei das Gehäuse (50) einen siebten Wärmeträgerflüssigkeitseingang/-ausgang (87) umfasst, wobei der sechste Abschnitt (66) den siebten Eingang/Ausgang (87) und den zweiten Verbindungspunkt (42) verbindet.

## Claims

1. Thermal conditioning system (100) comprising:
- a heat-transfer liquid circuit (1) having:
a main circulation loop (2), a secondary loop (3), a first branch (4) and a second branch (5),
- a refrigerant fluid circuit (6) comprising a main loop (A) for circulation of refrigerant fluid having the following in succession in a direction of circulation of the refrigerant fluid:
-- a compression device (7),
-- a first bifluid exchanger (8) arranged both on the refrigerant fluid circuit (6) and on the main loop (2) of the heat-transfer liquid circuit (1) so as to enable an exchange of heat between the refrigerant fluid and the heat-transfer liquid in the main loop (2),
-- a second bifluid exchanger (9) arranged both on the refrigerant fluid circuit (6) and on the main loop (2) of the heat-transfer liquid circuit (1) so as to enable an exchange of heat between the refrigerant fluid and the heat-transfer liquid in the main loop (2),
-- a first expansion device (10),
-- a third bifluid exchanger (16) arranged both on the refrigerant fluid circuit (6) and on the secondary loop (3) of the heat-transfer liquid circuit (1) so as to enable an exchange of heat between the refrigerant fluid and the heat-transfer liquid in the secondary loop (3),
wherein the first branch (4) of the heat-transfer liquid circuit (1) links a first connection point (41) disposed on the main loop (2) to a second connection point (42) disposed on the main loop (2), the first branch (4) being configured such that the heat-transfer liquid at the outlet of the first bifluid exchanger (8) returns to an inlet (8a) of the first bifluid exchanger (8) without passing through the second bifluid exchanger (9), the first branch (4) having a second heat exchanger (12) configured to exchange heat with a second air stream (F2),
and wherein the second branch (5) of the heat-transfer liquid circuit (1) links a third connection point (43) disposed on the first branch (4) downstream of the second heat exchanger (12) to a fourth connection point (44) disposed on the main loop (2) upstream of the second bifluid exchanger (9), the second branch (5) having a third heat exchanger (13) configured to exchange heat with the second air stream (F2).

2. Thermal conditioning system according to Claim 1, wherein the main loop (2) of the heat-transfer liquid circuit (1) has a first heat exchanger (11) configured to exchange heat with a first air stream (F1).

3. Thermal conditioning system according to Claim 2, wherein the first air stream (F1) is an air stream internal to an interior of a motor vehicle, and wherein the second air stream (F2) is an air stream external to an interior of the vehicle.

4. Thermal conditioning system according to one of the preceding claims, wherein the third heat exchanger (13) is disposed upstream of the second heat exchanger (12) in a direction of flow of the second air stream (F2).

5. Thermal conditioning system according to one of the preceding claims, wherein the third bifluid exchanger (16) is configured to be thermally coupled to a first element (25) of an electric powertrain of a motor vehicle.

6. Thermal conditioning system according to one of the preceding claims, wherein the refrigerant fluid circuit (6) has a first bypass branch (B) linking a first junction point (31) disposed on the main loop (A) downstream of the second bifluid exchanger (9) and upstream of the third bifluid exchanger (16) to a second junction point (32) disposed on the main loop (A) downstream of the third bifluid exchanger (16) and upstream of the compression device (7), the first bypass branch (B) having a fourth bifluid exchanger (20) configured to be thermally coupled to a second element (26) of an electric powertrain of the vehicle.

7. Thermal conditioning system according to the preceding claim, wherein the main loop (A) of the refrigerant fluid circuit (6) has a refrigerant fluid accumulation device (21) disposed downstream of the third bifluid exchanger (16) and upstream of the second junction point (32).

8. Thermal conditioning system according to Claim 6 or 7, wherein the refrigerant fluid circuit (6) has a second bypass branch (C) linking a third junction point (33) disposed on the main loop (A) downstream of the second bifluid exchanger (9) and upstream of the first junction point (31) to a fourth junction point (34) disposed on the main loop (A) downstream of the third bifluid exchanger (16) and upstream of the second junction point (32), the second bypass branch (C) having the following in succession: a third expansion device (23) and a fourth heat exchanger (14) configured to exchange heat with the first air stream (F1).

9. Thermal conditioning system according to one of the preceding claims, wherein the refrigerant fluid circuit (6) has a third bypass branch (D) linking a fifth junction point (35) disposed on the main loop (A) downstream of the compression device (7) and upstream of the second bifluid exchanger (9) to a sixth junction point (36) disposed on the main loop (A) downstream of the fifth junction point (35), the third bypass branch (D) having a fifth heat exchanger (15) configured to exchange heat with the second air stream (F2).

10. Thermal conditioning system according to Claim 9 in combination with Claim 8, wherein the refrigerant fluid circuit (6) has a fourth bypass branch (E) linking a seventh junction point (37) disposed on the main loop (A) downstream of the fourth junction point (34) and upstream of the compression device (7) to an eighth junction point (38) disposed on the third bypass branch (D) downstream of the fifth junction point (35) and upstream of the fifth heat exchanger (15), wherein the refrigerant fluid circuit (6) has a fifth bypass branch (F) linking a ninth junction point (39) disposed on the main loop (A) downstream of the third junction point (33) and upstream of the third bifluid exchanger (16) to a tenth junction point (40) disposed on the third bypass branch (D) downstream of the fifth heat exchanger (15) and upstream of the sixth junction point (36), and wherein the fifth bypass branch (F) has a fourth expansion device (24).

11. Thermal conditioning system according to one of Claims 1 to 10, wherein the main loop (A) of the refrigerant fluid circuit (6) comprises a sixth heat exchanger (76) disposed upstream of the first expansion device (10), the sixth heat exchanger (76) being configured to exchange heat with the first air stream (F1).

12. Thermal conditioning system according to one of Claims 1 to 10, wherein the refrigerant fluid circuit (6) has a sixth bypass branch (G) linking an eleventh junction point (59) disposed on the main loop (A) upstream of the first bifluid exchanger (8) to a twelfth junction point (60) disposed on the main loop (A) downstream of the second bifluid exchanger (9), and wherein the sixth bypass branch (G) comprises a sixth heat exchanger (76) configured to exchange heat with the first air stream (F1).

13. Thermal conditioning system (100) according to one of the preceding claims in combination with Claim 6, comprising a casing (50) which defines a receiving volume,
wherein the main loop (A) of the refrigerant fluid circuit (6) is inside the casing (50) and wherein the first bypass branch (B) of the refrigerant fluid circuit (6) is inside the casing (50).

14. Thermal conditioning system according to the preceding claim in combination with Claim 8, wherein the second bypass branch (C) of the refrigerant fluid circuit (6) has a first portion (C1) inside the casing (50), wherein the casing (50) has a first inlet/outlet (81) for refrigerant fluid, the first portion (C1) linking the third junction point (33) and the ninth inlet/outlet (81), and wherein the second bypass branch (C) of the refrigerant fluid circuit (6) has a second portion (C2) inside the casing (50), wherein the casing (50) has a second inlet/outlet (82) for refrigerant fluid, the second portion (C2) linking the fourth junction point (34) and the second inlet/outlet (82).

15. Thermal conditioning system according to Claim 13 or 14, wherein the main loop (2) of the heat-transfer liquid circuit (1) has a fifth portion (65) inside the casing (50), wherein the casing (50) has a fifth inlet/outlet (85) for heat-transfer liquid and a sixth inlet/outlet (86) for heat-transfer liquid, the fifth portion (65) linking the fifth inlet/outlet (85) and the sixth inlet/outlet (86), and wherein the first bifluid exchanger (8) and the second bifluid exchanger (9) are disposed on the fifth portion (65),
wherein the first branch (4) of the heat-transfer liquid circuit (1) has a sixth portion (66) inside the casing (50), and wherein the casing (50) has a seventh inlet/outlet (87) for heat-transfer liquid, the sixth portion (66) linking the seventh inlet/outlet (87) and the second connection point (42).
